# EUROPEAN PATENT SPECIFICATION

(11) **EP 3 471 889 B1**
(45) Date of publication and mention of the grant of the patent: **08.04.2020**
(21) Application number: 17702610.1
(22) Date of filing: 31.01.2017
(51) Int. Cl.: B05B 1/08, A01G 25/16, B05B 1/30, B05B 12/06

(54) **PULSATOR VALVE DEVICE**
PULSATORVENTILVORRICHTUNG
DISPOSITIF À CLAPET DE PULSATION

(30) Priority: 17.06.2016 DE 102016007393
(43) Date of publication of application: 24.04.2019
(73) Proprietor: Husqvarna AB, 561 82 Huskvarna (SE)
(72) Inventor: RENNER, Thomas, 89079 Ulm (DE); MAAG, Markus, 89081 Ulm (DE)
(74) Representative: Finkele, Rolf
(86) International application number: PCT/EP2017/052029
(87) International publication number: WO 2017/215794

(56) References cited:
- EP-A1- 2 527 061
- WO-A1-2013/008110
- US-A- 6 026 851
- US-A1- 2009 090 796

## Description

The present invention relates to a pulsator valve device and an irrigation device.

The document US 7,500,619 B2 discloses an apparatus for reducing the effective precipitation rate of an irrigation sprinkler during an irrigation cycle without disrupting the supply of pressurized water from the source opening and closing the inlet to the sprinkler riser at timed intervals through the use of a flow stop valve assembly disposed at the base of the riser, and which includes a lost motion piston and cylinder assembly and first and second flow control devices which control the time the flow stop valve is in the open and closed conditions during the irrigation cycle. Another known pulsator valve device is shown in US 6,026,851.

In general, spray nozzles for small-area irrigation spray relatively much water, e.g. per squaremeter, compared to stream rotors for large surface irrigation. For the use of both types of sprinklers in an irrigation system, the sprinklers have to be operated independently from each other with respect to time parameters in order to achieve a uniform distribution of liquid. For this purpose, electronic valves and irrigation controls are used which are expensive, complex and space consuming. A reduction of the nozzle cross section in order to reduce the amount of precipitation comprises technical problems, because it is difficult to achieve a defined spray pattern with a small amount of liquid. Further, narrow gap dimensions are difficult to manufacture.

A problem to be solved by the invention is to provide a device for generating a pulsed flow of liquid, in particular to generate a defined spray pattern with low precipitation rate.

Embodiments according to the invention are in particular disclosed and claimed in the attached claims. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention the problem of the invention is solved by a pulsator valve device according to claim 1.

In an embodiment a pulsator valve device for generating a pulsed flow of a liquid through an outlet of a passage for the liquid comprises
a) at least one valve element which is moveable or operated in a repetitive movement (or: working cycle) comprising an opening movement from a closed state for closing the outlet to at least one opened state for opening the outlet and a closing movement from an opened state to the closed state,
b) at least one actuator element and
c) at least one resilient first bellows having folds and an inner space being confined in a liquid tight manner, the first bellows being connected with the actuator element and with the valve element,
d) wherein the actuator element has at least one hydraulic surface (or: piston surface, hydraulic piston area) which can be put under the liquid pressure of the liquid in the passage on one side and under the internal pressure prevailing in the inner space of the first bellows on the other side,
e) wherein the first bellows is provided with a liquid exchange channel for its inner space allowing for liquid to flow out of the inner space when the volume of the inner space is reduced during compression of the first bellows and allowing for liquid to flow into the inner space when the volume of the inner space is increased during decompression of the first bellows, and
f) wherein the first bellows, during at least part of the (closing) time or phase when the valve element is in the closed state and/or in at least a part of the opening movement of the valve element, is, in particular elastically, compressed by a hydraulic force being generated at the hydraulic surface of the actuator element due to the pressure difference between the liquid pressure and the internal pressure and, in at least a part of the closing movement of the valve element, is decompressed or elongated by a resilient (or: elastic restoring or return) force in the first bellows, when due to a flow of liquid into the inner space through said liquid exchange channel said pressure difference and thus said hydraulic force is reduced or even becomes zero.

In an advantageous embodiment a stop portion is provided enclosing or comprising at least a part of the outlet and having at least one contacting surface which, in the closed state, comes into sealing contact with a corresponding contacting surface of the valve element thereby closing the outlet.

Preferably the contacting surface of the valve element separates a first surface and a second surface from each other, wherein the first surface serves as a hydraulic surface which is put under the liquid pressure of the liquid in the opened state as well as in the closed state, and wherein the second surface faces the outlet in the closed state and serves as a hydraulic surface which is put under the liquid pressure of the liquid in the opened state.

In an embodiment the first surface and the second surface and the contacting surface form a dome or mushroom shaped or conical outside surface of the valve element.

In a preferred embodiment the liquid exchange channel is formed at least partially within the valve element. Advantageously a first end of the liquid exchange channel exits into the inner space of the first bellows directly or indirectly by means of an intermediate hose and a second end of the liquid exchange channel exits into the liquid or the passage for the liquid in the opened state and exits into the outlet in the closed state.

In particular, in case of a hose, the cross-section of the hose is compressed more under a higher liquid pressure, preferably thus self-regulating the flow rate through the hose when the liquid pressure is higher.

In a further embodiment the hose is attached to the valve element by a pivot joint, wherein in particular the valve element is guided at least in an axial direction by a guiding structure.

In an advantageous embodiment the first bellows is arranged in between and may be compressed and decompressed between the valve element and the actuator element. Preferably the first bellows exerts a resilient force in the closing direction onto the valve element in the closed state and/or the hydraulic surface of the actuator element is preferably directed in the opening direction and/or the hydraulic force generated at the hydraulic surface of the actuator element is directed in the closing direction.

A further resilient element may be arranged in between the actuator element and a support element and elastically deformed between the actuator element and the support element and by such deformation generate a resilient force between the actuator element and the support element. Preferably the further resilient element is a second bellows, which may enclose the first bellows and/or have a larger diameter than the first bellows.

Now, preferably, at the beginning of a repetitive movement the actuator element under the influence of the hydraulic force compresses the first bellows and the second bellows in the closed state of the valve element and in an initial opening movement.

In another advantageous embodiment the first bellows is arranged in between and may be compressed and decompressed between the actuator element and a support element, which the first bellows is connected with and which is arranged at a fixed or not moveable position, preferably at a side opposite to the side of the valve element. The hydraulic surface of the actuator element is in particular directed in the closing direction and/or the hydraulic force generated at the hydraulic surface of the actuator element is in particular directed in the opening direction.

Also in this embodiment a further resilient element is advantageously provided, in particular a spring element, preferably tension spring element, or a second bellows, which resilient element is arranged in between and deformed between the valve element and the actuator element and by such deformation, in particular elongation, generates a resilient force, in particular pulling force, between the valve element and the actuator element.

In a preferred embodiment a closing end position of the actuator element in the closing direction is provided either by stopping means, in particular formed by the second bellows when its folds are in a locking state, or by a position where the forces on the actuator element in the opening direction exceed the forces in the closing direction. In this closing end position preferably the hydraulic force in the closing direction at the hydraulic surface of the actuator element passes through a support structure or element and/or bypasses the valve element. Further preferably, the hydraulic force at the hydraulic surface, in particular first surface, of the valve element moves the valve element in the opening direction against the smaller resilient force of the first bellows in an initial opening movement, wherein after this initial opening movement the second surface of the valve element also serves as a hydraulic surface increasing the hydraulic force in the opening direction and thereby compressing the first bellows further and moving the actuator element in the opening direction.

In another embodiment the liquid exchange channel is at least partially formed by a balancing tube, connected with the first bellows and/or with the actuator element and preferably moveable within a passage in the valve element, wherein the balancing tube, preferably, comprises an engagement piece for engaging with a catch surface at the valve element and pulling the valve element away from its closed state or the outlet or the stop portion thus opening the outlet.

In this embodiment, preferably, the balancing tube, being moved by the compression movement of the first bellows due to the hydraulic force on the hydraulic surface of the actuator element, engages with its engagement piece with the catch surface and moves the valve element in the opening direction against the smaller resilient force of the first bellows in an initial opening movement, wherein, preferably, after this initial opening movement the second surface of the valve element also serves as a hydraulic surface increasing the hydraulic force in the opening direction.

In a further preferred embodiment an opening end position of the actuator element in the closing direction is provided either by stopping means, in particular formed by the second bellows when its folds are in the most extended state, or by a position where the forces on the actuator element in the closing direction exceed the forces in the opening direction. Preferably, in this opening end position the first bellows reaches or has reached its maximum compression and has started or starts to get its inner space gradually refilled with liquid through the liquid exchange channel thereby increasing the internal pressure in the inner space and reducing the hydraulic force so that the resilient force of the first bellows in the closing direction moves the valve element back into its closed state.

The inner space of the first bellows may be delimited at one side or one end in a liquid-tight manner by the actuator element and at the other side or other end in a liquid-tight manner by the valve element or by a closed wall.

In an embodiment the actuator element and/or the first bellows and/or the further resilient element, in particular second bellows (14) or spring element, is moveably arranged within the passage for the liquid.

In a further embodiment the actuator element and the first bellows and optionally also the valve element and/or the further resilient element and/or the balancing tube together form one pre-manufactured element, in particular made integral with each other as a single piece and/or in one injection molding process and/or in one molding form set, preferably from one or more plastics or polymer materials.

In another embodiment the actuator element and the second bellows and the support element form one pre-manufactured element, in particular made integral with each other as a single piece and/or in one injection molding process and/or in one molding form set, preferably from one or more plastics or polymer materials.

The invention, accordingly, reduces manufacturing time and provides a dirt resistant solution. Further sealing rings are not needed any more.

By at least one or any combination of the following parameters the duration of the opened state and of the closed state and/or the period or frequency of the pulsating flow of liquid may be set or determined:
a) the volume of the inner space of the first bellows, wherein usually a larger volume will decrease the frequency;
b) the cross-section of the liquid exchange channel, wherein usually a larger cross-section will increase the frequency;
c) resilience (resilient or spring hardness) of the first bellows and, if provided, the further resilient element, in particular second bellows, wherein usually a higher will shorten the opened state;
d) shapes and ratios of the hydraulic surface areas;
e) distance or amplitude between the closing end position, in particular the locked state of the second bellows, and the opposite opening end position, in particular the most elongated state of the second bellows, wherein usually a larger distance will increase the frequency;
f) length of the balancing tube.

The liquid exchange channel is, in an embodiment, at least partially formed within a second bellows.

In an embodiment a flap valve element or a check valve element is provided between the liquid exchange channel and the inner space of the first bellows, which at least partially impedes the flow of air and/or liquid from the channel into the inner space and which allows the flow of air and/or liquid from the inner space into the channel.

In an advantageous further embodiment the pulsator valve device further comprises at least one positioning element, in particular adjustable by a user, which is able to delimit or which delimits the axial movement or defines the opening end position of the actuator element by changing the adjustment length, in particular in such way, that the positioning element can be continuously adjusted to delimit the position of the actuator element in order to fully or partially impede the decompression of the first bellows and thus varying the frequency or in particular allowing a continuous flow of liquid through the outlet.

Grooves arranged in the valve element allowing for a minimum amount of liquid to flow through even in the closed state can reduce pressure peaks generated from variable supply pressure.

Furthermore, the valve element can be formed like a check valve or back pressure valve or return valve so that closing intervals and opening intervals can be controlled independently from each other.

In an advantageous embodiment at least one positioning element is provided, in particular operable by a user, which is able to delimit or which delimits the axial movement of the actuator element in an upstream direction, in particular in such way, that the positioning element can be continuously adjusted to delimit the position of the actuator element in order to fully or partially impede the decompression of the first resilient element into a fully decompressed status.

By means of such positioning element it is possible to achieve different liquid jets, such as a constant or permanent liquid jet, a pulsed liquid jet with high frequency or a pulsed liquid jet with low frequency.

It is further advantageous to provide an irrigation device, in particular a garden sprayer or garden nozzle, an oscillating sprinkler, a wide range sprinkler, a circular sprinkler or an irrigation supply line, with a pulsator valve device according to the invention.

Thus, an irrigation device with a low effective precipitation rate can be provided, particularly advantageous when used for small area irrigation.

The pulsator valve device enables a pulsating supply of liquid to a distributor connected therewith. Small area irrigation devices can be advantageously operated with such a pulsator valve device because it is possible to reduce the amount of irrigation liquid in comparison to large area irrigation devices. Thus, small area irrigation devices can be connected to the same supply system as the large area irrigation devices. Further, it is possible to achieve an advantageous spray pattern by using such pulsator valve device. The function of the pulsator valve device requires no external power supply, but the movement of the movable parts is exclusively achieved by hydraulic pressure.

The present invention will be described further with reference to the accompanying drawings, in which
- FIG 1 to 4: illustrate a first embodiment of a pulsator valve device according to the invention in different operational states in a mainly sectional view,
- FIG 5 to 7: depict a second embodiment of a pulsator valve device according to the invention in different operational states in a partially sectional and partially perspective view,
- FIG 8: shows a third embodiment of a pulsator valve device according to the invention in a partially sectional and partially perspective view,
- FIG 9: shows an enlarged section of the device of FIG 8 marked by IX in FIG 8 in a sectional view,
- FIG 10: illustrates a fourth embodiment of a pulsator valve device according to the invention in a mainly sectional view,
- FIG 11: illustrates a fifth embodiment of a pulsator valve device according to the invention in a mainly sectional view and
- FIG 12 to 14: depict a sixth embodiment of a pulsator valve device according to the invention in different operational states in a sectional view.

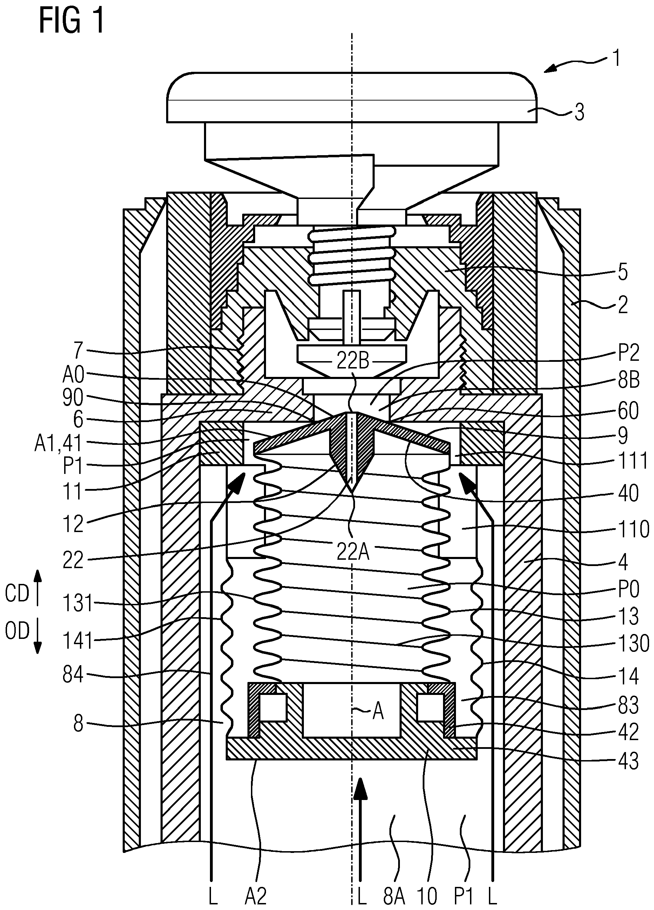

Corresponding parts and quantities are designated by the same reference signs in FIG 1 to 14.

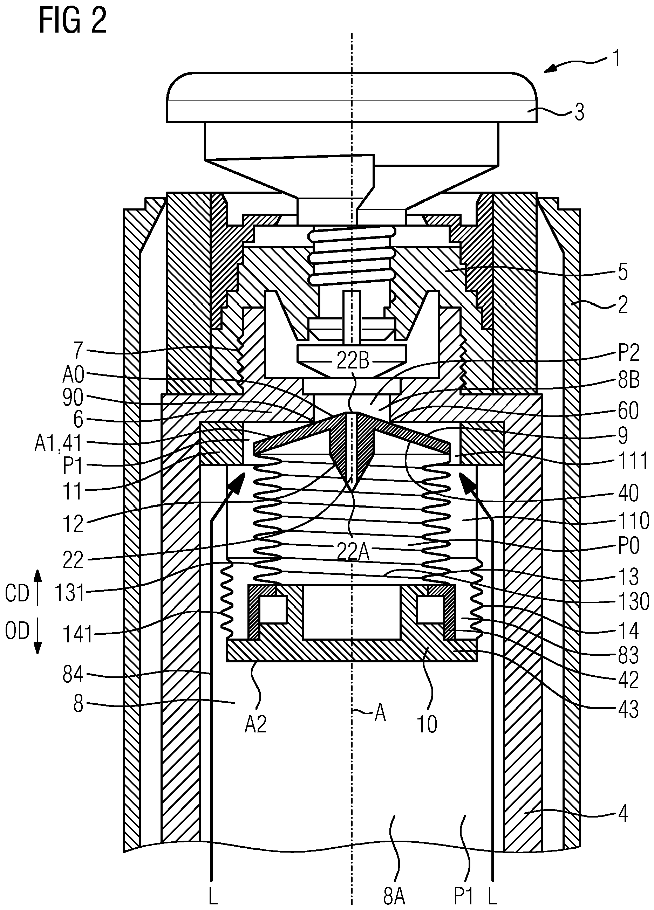

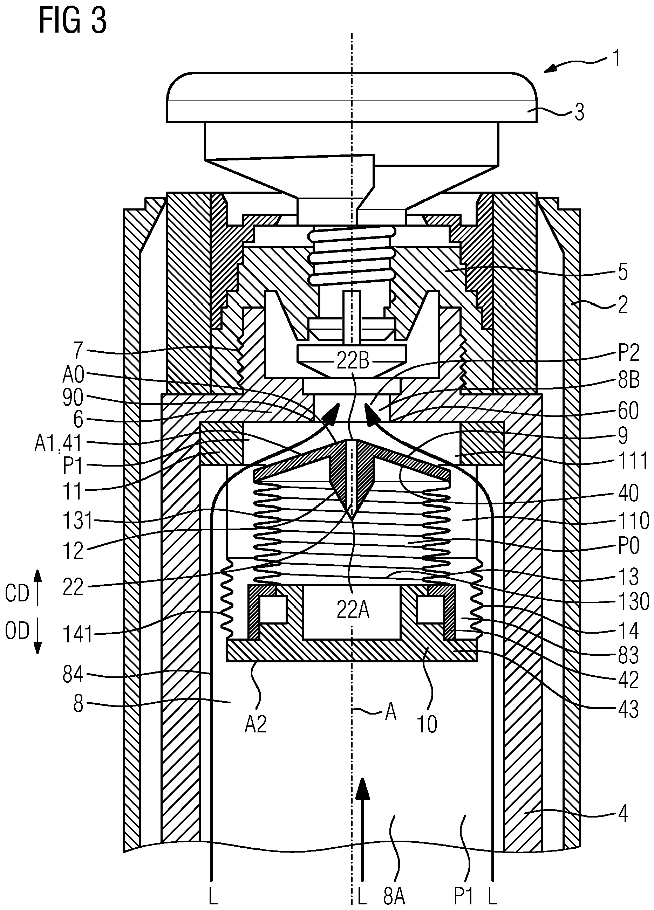

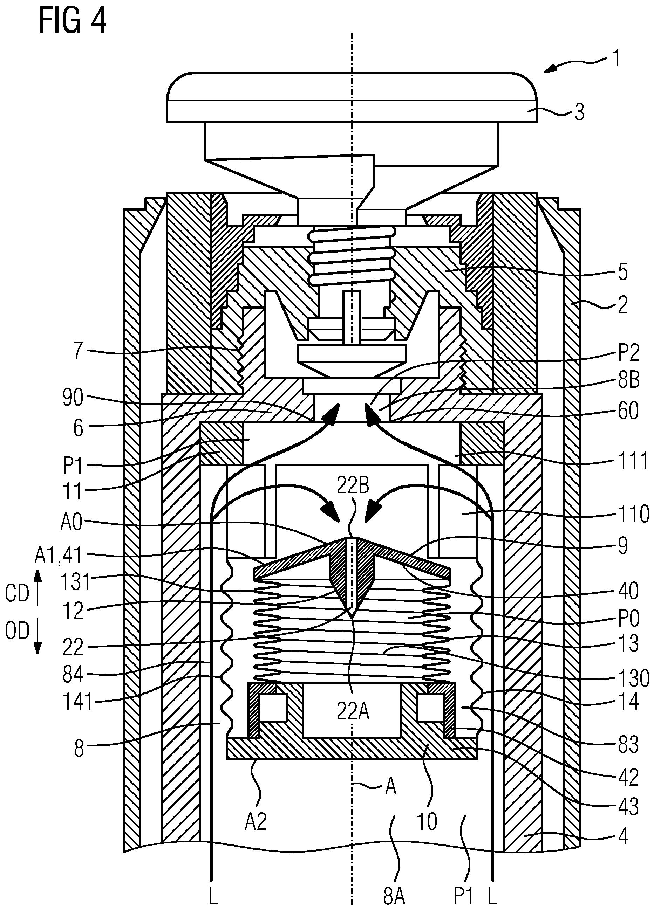

A first embodiment of a pulsator valve device is shown in FIG 1 and FIG 2 in a closed state and FIG 3 and FIG 4 in an open state.

A valve element 9 is provided for closing or opening an outlet 8B of a passage (or: channel) 8 for guiding liquid L entering the passage 8 at an inlet 8A. The outlet 8B is formed in or enclosed by a stop portion 6. The passage 8 is preferably formed and the pulsator valve device and its valve element 9 are preferably arranged inside a valve housing 4.

At least one contacting surface 90 at an outside surface (or: head) 41 of the valve element 9 may come into closing or sealing contact with at least one corresponding contacting surface 60 of or at the stop portion 6 facing towards the valve element 9, in order to seal or close the outlet 8B, as shown in FIG 1 and 2.

The contacting surfaces 90 and 60 are preferably at least partially adapted in shape to each other. In particular both contacting surfaces 60 and 90 are ring-shaped and may be of conical shape as shown in FIG 1 to FIG 4 or also of flat shape. Other shapes of the contacting surfaces 60 and 90 can be chosen too.

A closing direction CD of a closing movement of the valve element 9 is oriented opposite to an opening direction OD of an opening movement, both directions being illustrated by a respective arrow and preferably being orientated axial to or along an axis A. The opening and closing movement of the valve element 9 with respect to its counterpart, the stop portion 6, is controlled by an internal feedback mechanism using an interaction (or: superposition or vector sum) of varying hydraulic forces or piston forces exerted by the pressure of the liquid L and varying resilient forces by resilient elements, in particular 13 and preferably also 14, as will be explained further. In the closed operational state of FIG 1 and FIG 2 the overall or resulting closing force in the closing direction CD exceeds the opening force in the opening direction OD, whereas in the opened operational state of FIG 3 and FIG 4 the opening force in the opening direction OD exceeds the closing force in the closing direction CD and the valve element 9 is moved in the opening direction OD and the contacting surfaces 60 and 90 will not be in contact anymore and allow the liquid L to flow from the channel 8 into the outlet 8B.

An inside surface 40 of the valve element 9 delimits and seals one side, in particular front or upper side, of an inner space 130. This inner space 130 is further confined by a first bellows 13 which has folds 131 and forms a closed and sealed or liquid-tight, for instance circumferential, wall for the inner space 130 and also by a further wall at the other side, in particular lower side, in particular a wall of a mounting part 43 or an actuator element 10. The first bellows 13 is mechanically coupled or connected to the valve element 9 at one end and to a mounting part 42 at another end, which mounting part 42 is connected or mounted to the mounting part 43 which is a part of the actuator element 10.

The inner space 130 of the first bellows 13 can be filled with a medium such as air or other gas from the surroundings or at least partially with the liquid L. The pressure prevailing in the inner space 130 is designated by P0.

A first end 22A of a channel 22, which channel 22 preferably extends along the axis A, exits into the inner space 130 and a second end 22B of the channel 22 exits into the outlet 8B in the closed operational states shown in FIG 1 and 2 and into the passage 8 in the open operational states shown in FIG 3 and 4, so that the inner space 130 is fluidly connected to the outside of the bellows 13 by the channel 22.

In preferred embodiments the whole outside surface 41 and preferably also the inside surface 40 of the valve element 9 is conically shaped or dome- or mushroom-shaped and preferably extends radially outwardly with respect to an inner section 12 which contains the channel 22 as an inner channel or hole.

The contacting surface 90 at the outside surface 41 of the valve element 9 separates an inner surface area A0 and an outer surface area A1.

The outer surface A1 is, in all operational states of FIG 1 to 4, inside the passage 8 and put under the pressure P1 of the liquid L in the passage 8 thereby receiving and passing on an hydraulic force or hydraulic piston force in the opening direction OD which is approximately equal to the product of the pressure difference P1 - P0 between the outside surface 41 and the inside surface 40 on one hand and the orthogonal projection of A1 along the opening direction OD or axis A on the other hand, so that it can be called an hydraulically active surface.

The inner surface area A0 is, in the closed operational states of FIG 1 and FIG 2,
hydraulically inactive and does not contribute to hydraulic force, as it faces the outlet 8B, which, due to the closed outlet 8B and the contacting surfaces 60 and 90 separating or sealing the channel 8 from the outlet 8B, is no longer under the influence of pressure P1 of the liquid L. However, in the opened operational states of FIG 3 and FIG 4, the inner surface area A0 faces the passage 8 and the pressure P1 of the liquid L, so that it is hydraulically active and does indeed contribute to hydraulic force together with the outer surface area A1. Thus, the whole outside surface 41 of the valve element 9 serves a hydraulic piston area and thus, a higher opening hydraulic force, which is approximately equal to the product of the pressure difference P1 - P0 and the orthogonal projection of A1 + A0 along the opening direction OD or axis A, is generated, as the active hydraulic surface A1 + A0 is now bigger than the previous outer surface area A1 alone.

The actuator element 10 has a hydraulic surface area A2 facing towards the inlet 8A and away from the outlet 8B and serving as a hydraulic piston area for a hydraulic force in the closing direction CD. The hydraulic surface area A2 is preferably flat and orthogonal to the closing direction CD and the axis A. The pressure P1 of the liquid L in the passage 8 exerts or applies a hydraulic force through the hydraulic surface area A2 in a closing direction CD which is at least approximately equal to the product (P1 - P0) x A2. The hydraulic or piston surface area A2 for the hydraulic closing force is usually larger than the combined (orthogonally projected) hydraulic piston areas A1 + A0 for the hydraulic opening force.

The hydraulic piston area A2 does not have to be at a separate actuator element 10 as shown but can be at any part connected or coupled or also integral with the first bellows 13.

The pressure P2 prevailing in the outlet 8B is lower than the pressure P1 of the liquid L, when the outlet 8B is closed by the valve element 9, as shown in FIG 1 and 2, and equal to the pressure P1 of the liquid L, when the outlet 8B is not closed by the valve element 9, as shown in FIG 3 and 4.

In the preferred embodiment shown a second bellows 14 is also provided having folds 140 and partially enclosing or surrounding the first bellows 13 leaving an inner space 83 between the bellows 13 and 14. The second bellows 14 are connected or integral with the mounting part 43 of the actuator 10 at one end and are connected or integral with a support element 11 at the other end. The support element 11 rests against and is connected to the valve housing 4 and the stop portion 6 and has openings 110 and 111 for passing through the liquid L.

Both bellows 13 and 14 extend along the closing direction CD and the opening direction OD and/or along a central axis A so that the bellows 13 and 14 with their corresponding folds 131 and 141 surround the axis A. The folds 131 and/or 141 may be parallel in planes orthogonal to the axis A or helical around the axis A, the latter allowing for easier removal from a molding form by a screwing motion. Between the second bellows 14 and the valve housing 4 an intermediate space 84 within the passage 8 is formed for passage of the liquid L. Both bellows 13 and 14 exert resilient or elastic restoring forces upon deformation such as compression or elongation with respect to an equilibrium position. These resilient forces are used for the feedback function of the pulsator valve device in combination with the hydraulic forced exerted by the liquid L onto the hydraulic surfaces A1 (and A0) and A2.

This feedback mechanism and the operation and movement of the pulsator valve device will be explained further in the following.

In FIG 1 the bellows 13 and the bellows 14 are both elongated to a maximum extent, in particular they may be in a relaxed state or close to a relaxed or equilibrium state. The liquid L enters and fills the passage 8 but cannot leave it as the outlet 8B is closed by the valve element 9. The pressure P1 of the liquid L prevailing in the passage 8 can at least approximately be considered as being constant throughout the passage 8 from the inlet 8A through the intermediate space 84 between the outer second bellows 14 and the inner wall of the valve housing 4 and in the openings 110 and 111 next to the valve element 9. Thus, the liquid L exerts the same pressure P1 onto the hydraulic surface A1 at the valve element 9 as well as onto the hydraulic surface area A2 of the actuator element 10. Since the orthogonal projection of A1 is smaller than A2 a hydraulic force in the closing direction CD results.

As is shown in FIG 2, this hydraulic force effectuates a movement of the actuator element 10 in the closing direction CD which results in a compression of both bellows 13 and 14. At the same time, liquid L and/or other medium such as air that may be in the inner space 130 of the first bellows 13 may be at least partially pressed out or discharged through the channel 22 and exit into the outlet 8B at the second end 22B.

This closing movement in the closing direction CD then leads to a state of the second bellows 14 where the second bellows 14 is compressed to a maximum amount and its folds 141 are locked so that no further compression is possible or can be effectuated by the hydraulic force. In this locked state or stopping position the hydraulic force in the direction of the closing direction CD from the actuator element 10 is now absorbed and bypassed in the outer structure, namely from the actuator element 10 through the second bellows 14 into the support element 11 and from there into the valve housing 4 and the stop portion 6.

Therefore, the second bellows 14 defines a stop position or bypass position at a minimum distance in which the hydraulic force from the hydraulic surface A2 bypasses the valve element 9 through other structure elements and does not contribute to further compressing the first bellows 13 and thus to increasing the pressing force of the valve element 9 against the stop portion 6 at the contacting surfaces 90 and 60 in the closing direction CD by means of the first bellows 13 anymore. The second bellows 14 is, thus, designed in such a way that its folds 141 reach the locked state before the folds 131 of the first bellows 13 reach the locked state, or that the compression amplitude of the first bellows 13 is larger than that of the second bellows 14.

This locking or stopping function of the second bellows 14, allowing for a corresponding axial movement until the minimum distance is reached, is its most important function in the pulsator valve device. However, this function can also be fulfilled by another resilient element such as a spiral spring or by simple stopping surfaces, for instance at the actuator 10 and the support element 11, which come into contact at a stopping position. The second bellows 14 may also be used to contribute with its resilient force upon compression to move the valve element 9 in the opening direction OD as shown in the transition from FIG 3 to FIG 4. However, also this function is not strictly necessary. Therefore, the second bellows 14 is advantageous but only optional.

In this stopping position or locked state of second bellows 14 the hydraulic force in the opening direction OD resulting from the pressure difference P1 - P0 onto the hydraulic surface area A1 now causes the valve element 9 to move in the opening direction OD further compressing the first bellows 13 against the actuator element 10 which is, at the same time, held in the stopping position by the hydraulic force through the hydraulic surface area A2.

By this initial opening movement the valve element 9 is, with its contacting surface 90 no longer in contact with the contacting surface 60 of the stop portion 6, and the liquid L can flow through the openings 111 passing by the outside surface 41 of the valve element 9 into the now opened outlet 8B, as shown in FIG 3. Liquid L from the inner space 130 of the first bellows 13 is pressed out through the channel 22 and exits at the second end 22B. In order to be able to compress the first bellows 13 its resilient force is chosen to be smaller than the resulting hydraulic force in the opening direction OD.

Now, the inner surface area A0 becomes also, in its orthogonal projection, active as a hydraulic area and the hydraulic force in the opening direction OD is increased accordingly to the product of P1 - P0 and the orthogonal projection of the sum of the hydraulic areas A1 + A0 as explained before. The first bellows 13 will be compressed between the two opposing hydraulic forces, the force in the closing direction CD at the surface A2 and the force in the opening direction OD at the surface areas A1 and A0.

The valve element 9 together with the first bellows 13 and the actuator 10 will move further in an opening movement in the opening direction OD under the interaction of forces including the resilient force of the compressed second bellows 14 until a final lower or free end position is reached as shown in FIG 4 where the second bellows 14 reaches a final and maximum extension. Therefore, the second bellows 14, by its maximum extension, also defines an opening end position in the opening direction OD opposite to the closing end position of the valve element 9 at the stop portion 6.

However, such an opening end position could also be defined by other stop means such as simple corresponding stop surfaces, for instance between the actuator 10 and the support element 11 or the valve housing 4. Such stop means could even be omitted completely so that the actuator element 10 would stop within its free movement after the position in FIG 3 and maybe some further movement in the opening direction OD when the forces in the closing direction CD exceed the forces in the opening direction OD.

Preferably in or starting from this lower or opening end position, for instance the end position shown in FIG 4, liquid L flows through the channel 22 from the passage 8 and through the openings 110 into the inner space 130 of the first bellows 13 which, consequently, leads to the pressure P0 inside the inner space 130 coming closer to or even equal to P1. By this pressure balancing process, which depends in time on the cross-section of the inner channel 22, there is now a smaller or decreasing pressure difference P1 - P0 between the outside surface 41 and the inside surface 40 of the valve element 9. Thus, there are basically no sufficient hydraulic forces pressing the first bellows 13 together anymore. The resilient force of the compressed first bellows 13 will extend the first bellows 13 again and move the valve element 9 in the closing direction CD and will keep pressing the actuator 10 in the opening direction OD in its end position, until the position as shown in FIG 1 is reached again where the valve element 9 is in closing or sealing contact with the stop portion 6 at the contacting surfaces 90 and 60 and closes the outlet 8B. The flow of liquid L through the outlet 8B is now interrupted and the same sequence or operation starts again in an automatic purely hydraulically and mechanically controlled way with a certain periodicity or frequency.

The liquid L exiting from the outlet 8B will thus be pulsed by the pulsator valve device and a pulsating liquid beam or liquid jet (stream) of the liquid be generated, which can be passed on to a dispensing or discharging device.

For a given pressure P1 of the liquid L, the following parameters determine, *inter alia* or in particular, the duration of the pulses (duration of opened state) and of the intermediate intervals (duration of closed state) and/or the period or frequency of the pulsating liquid jet L or of the pulsator valve device:
- volume of inner space 130 of the first bellows 13; usually a larger volume will decrease the frequency and increase the period of the pulsation;
- the cross-section or flow rate of the channel 22; usually a larger cross-section or flow rate will accelerate the pressure balancing and liquid exchange and thus increase the frequency and shorten the period of the pulsation;
- resilient parameter or elasticity or resilient hardness of the first bellows 13 and, if provided, the second bellows 14 or other resilient elements; usually a higher or harder resilience or elasticity will shorten the pulse duration or opened state;
- shapes and ratios of the hydraulic surface areas, in particular A0/A1 (in projection); usually a higher ratio A0/A1 will increase the frequency and shorten the period of the pulsation;
- distance or amplitude between the stopping or closing end position, in particular the locked state of the second bellows 14 (FIG 2 and FIG 3), and the opposite opening end position, in particular the most elongated state of the second bellows 14 (FIG 1 and 4); usually a larger distance will decrease the frequency and lengthen the period of the pulsation;

The valve element 9 is held in a central position around and parallel or axial to the axis A, in particular, within the support structure by means of the two bellows 13 and 14 and the mounting parts 42 and 43, but due to the axial deformability of the bellows 13 and 14 the valve element 9 can be moved axially for the closing and opening movement.

In a preferred embodiment the valve element 9, the first bellows 13 and the mounting part 42 form one pre-manufactured element, in particular made integral with each other as a single piece and/or in one injection molding process and/or in one molding form set, preferably from one or more plastics or polymer materials such as e.g. EPDM or NBR.

Furthermore, preferably, the actuator element 10 with the mounting part 43 and the hydraulic surface A2 and the second bellows 14 and the support element 11 with the openings 110 form a single piece or an injection molded piece, e.g. made of EPDM rubber or nitrile rubber, or in which the piece consisting of the valve element 9, the first bellows 13 and the end section 42 can be mounted. Therefore, only two pre-manufactured pieces can be used to form the pulsator valve device and a simple mounting process for connecting first part with second part is achieved, e.g. the first part can be connected to the second part by a snap mechanism. In particular, no further sealing elements are needed.

The pulsating liquid beam or liquid jet (stream) of the liquid L exiting from the outlet 8B may be passed on to a dispensing or discharging device, in particular for irrigation or liquid spraying purposes.

In the embodiment according to FIG 1 to 4 the pulsator valve device is arranged within or provided for a spray nozzle 1 which comprises a deflector 3 for deflecting or distributing liquid L, e.g. water, in desired directions which deflector 3 is mounted or held in a deflector holder 5 and further comprises a nozzle housing 2 in which the deflector holder 5 with the deflector 3 is mounted. Inside the nozzle housing 2 the pulsator valve device is mounted.

The valve housing 4 is mounted, for instance by means of a thread connection 7, to the nozzle housing 2 or, as shown, to the deflector holder 5. Liquid L may pass through the passage 8 from the inlet 8A to the outlet 8B of the pulsator valve device and then, when the outlet 8B is opened, towards the deflector 3 leaving the spray nozzle 1 at its outlet, for instance for watering or irrigation or other liquid spraying purposes, in particular to provide pulsed liquid jets or irrigation to a surrounding environment.

The pulsator valve device can, however, be used as a separate device in other applications and devices not only in a spray nozzle as shown in FIG 1 to FIG 4.

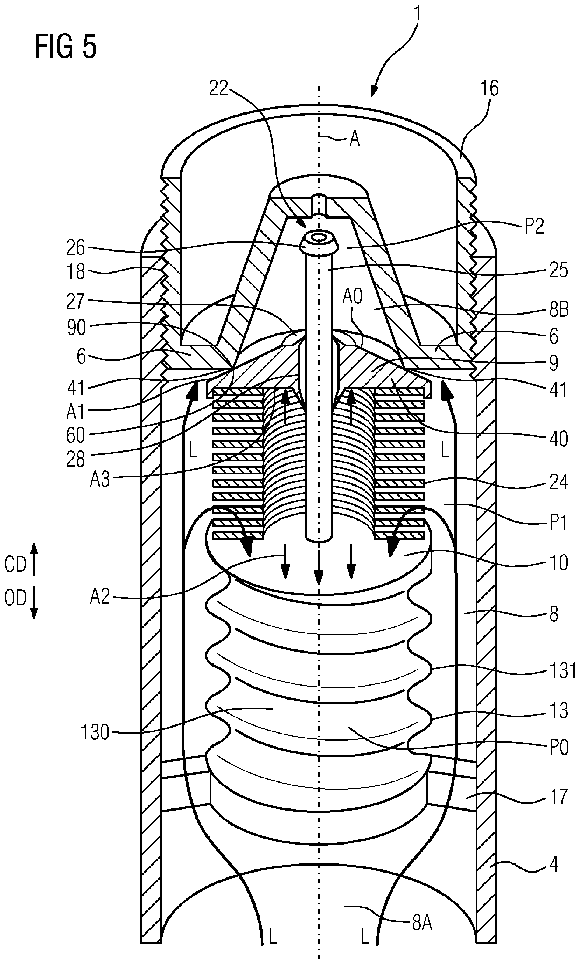

FIG 5 to 7 illustrate a second embodiment of a pulsator valve device. Within the valve housing 4, only one bellows 13 is provided and, instead of a second bellows, a spring element 24 is provided, in particular a tension spring. On a top end of the bellows 13 an actuator element 10 having a hydraulic surface area A2 facing towards the outlet 8B of the passage 8 is provided. At the other end the bellows 13 is fixed to the valve housing 4 by a support element 17.

The spring element 24 is, preferably at one end, attached to or integral with the actuator element 10 and, preferably at the other end, attached to or integral with the valve element 9. The valve element 9 has a preferably dome or curved or conical convex outside surface 41 which is again separated by the contacting area 90 into an outer hydraulic surface area A1 and an inner hydraulic surface area A0, and a, preferably flat and orthogonal to the axis A, inside surface 40, at which the spring element 24 is connected.

Further, a balancing tube 25 is provided, allowing liquid L to enter the inner space 130 of bellows 13. The balancing tube 25 is connected with the actuator element 10 and exits into the inner space 130 at one end and has another exit at a free end, where an engagement piece 26 is provided. Preferably, the balancing tube 25 extends along the axis A and and through a guiding passage 28 formed in a center region of the valve element 9 and through the interior of the spring element 24 and can move freely therein. The engagement piece 26, e.g. formed like a flange, may engage a catch surface 27 at the outside surface 41 of the valve element 9 for pulling the valve element 9 in the opening direction OD for opening the outlet 8B.

FIG 5 shows an initial state where the bellows 13 and the spring 24 are in a most relaxed ground or equilibrium state and the valve element 9 is in sealing contact with the stop portion 6 at the contacting surfaces 90 and 60 thereby closing the outlet 8B, so that the liquid L cannot exit from the channel 8 through the outlet 8B.

The inner surface area A0 of the outside surface 41 of the valve element 9 faces the outlet 8B and is not in contact with or under the pressure P1 of the liquid L, unlike the outer surface A1 which is smaller than the inner surface A0. A further hydraulic surface area A3 at the inside surface 40 of the valve element 9 is also under the influence of the liquid pressure P1 and is usually larger than the outer surface A1, so that the hydraulic force on the surface A3 in the closing direction CD is larger than the hydraulic force on the surface A1 in the opening direction OD and the valve element 9 is pressed against the stop portion 6 in closing contact.

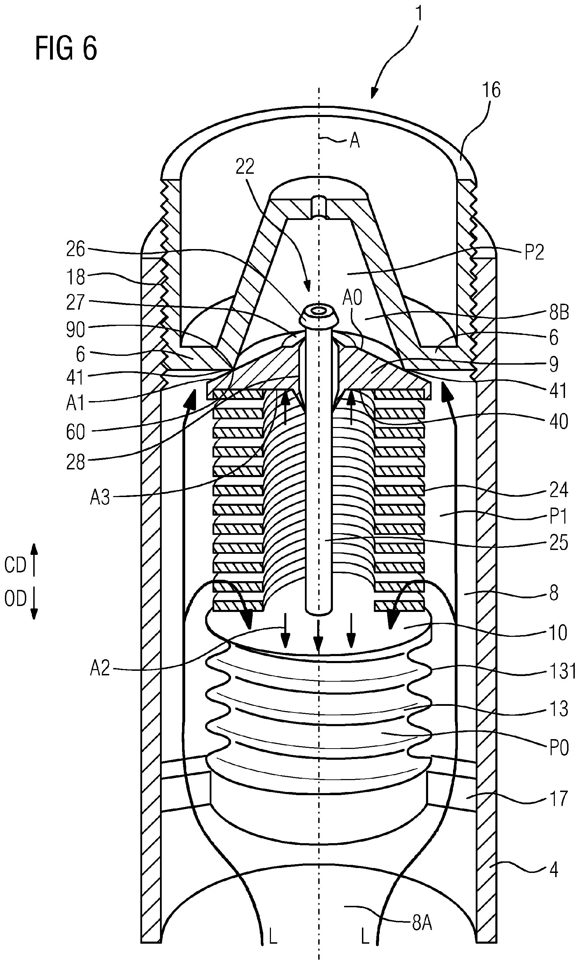

The pressure difference P1 - P0 of the liquid pressure P1 of the liquid L and the interior pressure P0 inside the inner space 130 of the first bellows 13 results in a hydraulic force in the opening direction OD at the hydraulic surface area A2 and, thus, in a compression of the bellows 13 towards the support element 17 in the opening direction OD. The spring 24 is expanded and exerts a resilient force. This is shown in FIG 6.

The bellows 13 also takes the balancing tube 25 with it in the opening direction OD. Shortly after the position or state shown in FIG 6, the engagement piece 26 will contact the catch surface 27 and pull the valve element 9 away from the stop portion 6 and thus open the outlet 8B. The length of the balancing tube 25 will influence this moment of catching the catch surface 27 and thus the opening of the outlet 8B.

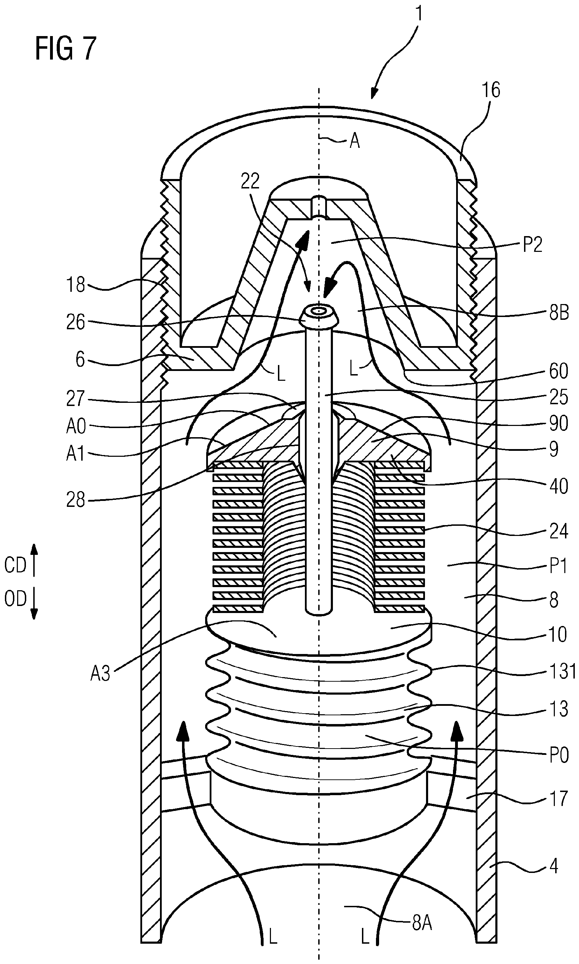

Now, similar to the embodiment of FIG 1 to 4, the hydraulic surface area of the valve element 9 in the opening direction OD is increased to the (projected) area A1 + A0 and the hydraulic force on the surfaces A1 and A0 in the opening direction OD is larger and may be larger than the hydraulic force on the surface A3 in the closing direction CD. Also the resilient force of the spring 24 exerts a pulling force onto the valve element 9 in the opening direction OD. The valve element 9 is therefore moved in the opening direction OD, the spring 24 relaxing again, until the position or state in FIG 7 is reached.

Liquid L starts entering the inner space 130 of the bellows 13 through the tube 25 in a pressure balancing process and the bellows 13 is expanded again, moving the valve element 9 towards the stop portion 6 in the closing direction CD until the position of FIG 5 is reached again and the process or sequence starts again and is repeated with a certain frequency or period. A nozzle element 16 is in fluid connection with the outlet 8B.

The spring element 24 and/or the bellows 13 and/or the valve element 9 may be made of plastics or polymer material, e.g. POM, and preferably integral with each other as one pre-manufactured element, in particular made as a single piece and/or in one injection molding process and/or in one molding form set.

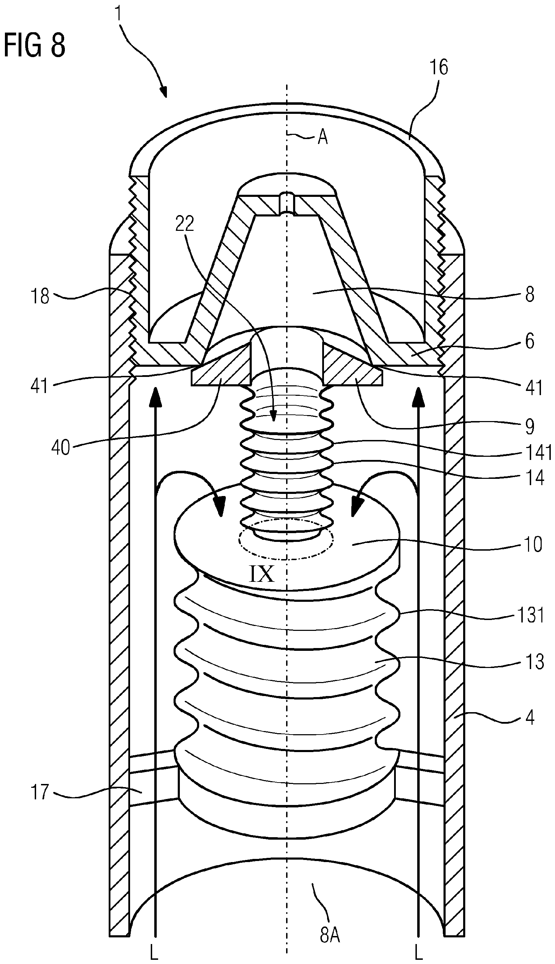

FIG 8 illustrates a further embodiment similar to the embodiment of FIG 5 to 7 wherein the spring element 24 and the tube 25 are replaced by a second bellows 14. The second bellows 14 serves as the channel 22 for liquid L to pass through into or from the inner space 130 of the first bellows 13 and also allows for axial movement and is fixed to or integral or connected with the valve element and on the opposite side to or with the actuator element 10. The first bellows 13 has a larger diameter than the second bellows 14, wherein the first bellows 13 may provide a larger resilient force or spring force than the second bellows 14.

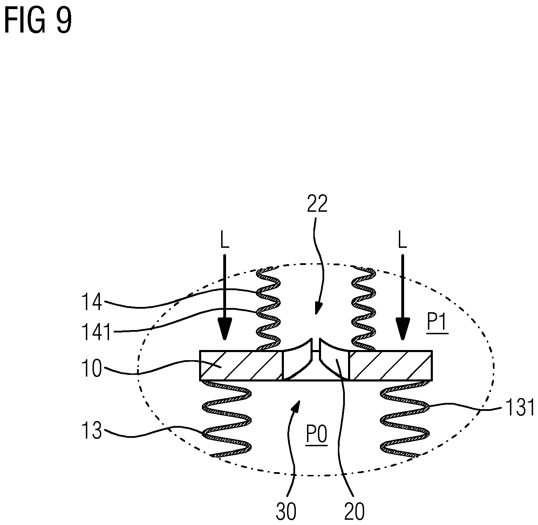

As shown in the detail of FIG 9 the actuator element 10 has an opening interconnecting the inner space 130 of bellows 13 and the passage or channel 22 of the bellows 14 which opening can be provided with a flap valve element 20. The flap valve element 20 enables the transfer of liquid and/or air from the inner space 130 to the channel 22, but prevents or reduces the transfer of liquid L from channel 22 into inner space 130.

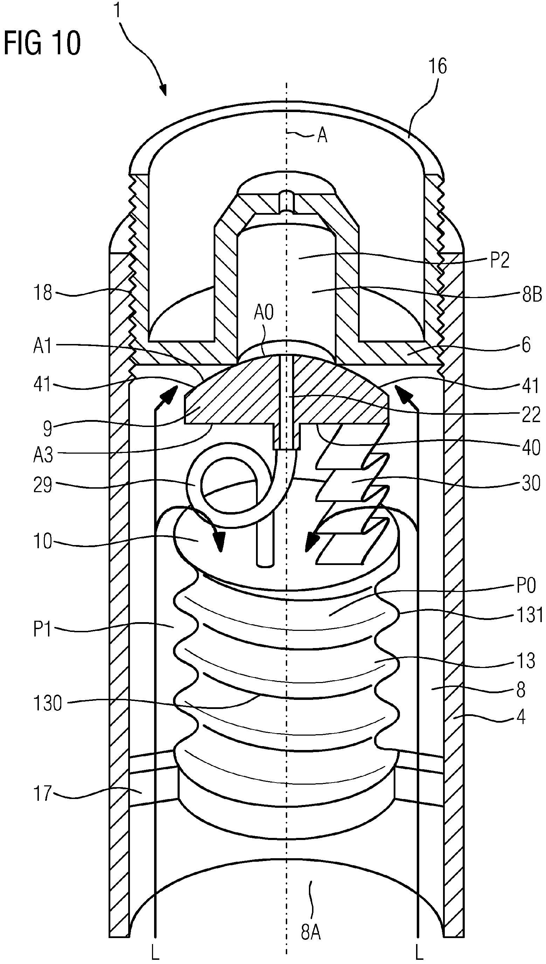

FIG 10 illustrates an alternative embodiment to the embodiments of FIG 5 to 7 or FIG 8.

The inner space 130 of the bellows 13 is connected with an inner channel 22 in the valve element 9 by a flexible tube or hose 29. A separate spring element 30 is provided for establishing a resilient force between valve element 9 and bellows 13 similar to the spring 24. The hose 29 may be made of silicone material which is relatively soft and elastic. Thus, the hose 29 can in particular be compressed by the liquid pressure P1 which reduces the cross section of the hose 29. The result of this reduction is that the flow rate through the hose 29 is reduced. Therefore, the overall pulse duration or frequency of liquid pulses provided by the pulsator valve device can be kept relatively constant even under variable liquid or water supply pressure.

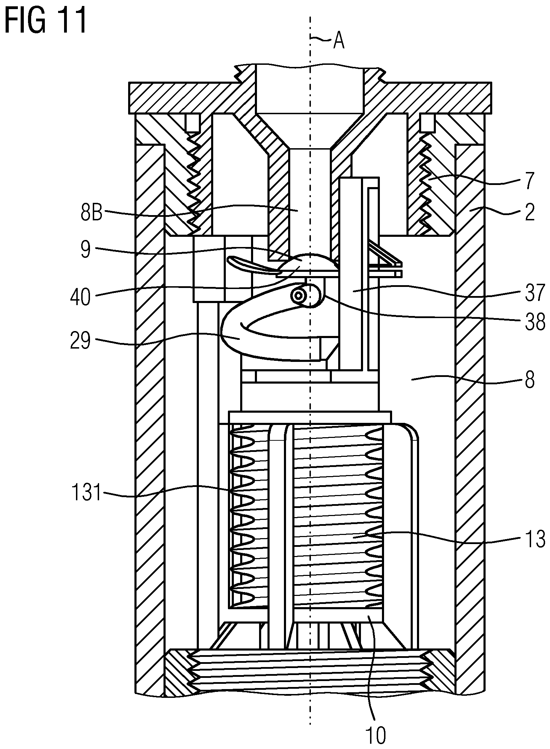

FIG 11 illustrates a further embodiment being similar to the embodiment as shown in FIG 10. The hose 29 is attached to the valve element 9 via a pivot joint 38. The linear ore axial movement of the valve element 9 is guided by a guiding structure 37, making the movement of the valve element 9 more precise. The pivot joint 38 may have bistable end positions, forcing the valve element 9 either in shut or closing position shutting the outlet 8B or in a fully open position. Such an embodiment allows a pulsating function without using a second resilient element in addition to the bellows 13, because the pivot joint 38 forcibly places the valve element 9 either in open or in closed position.

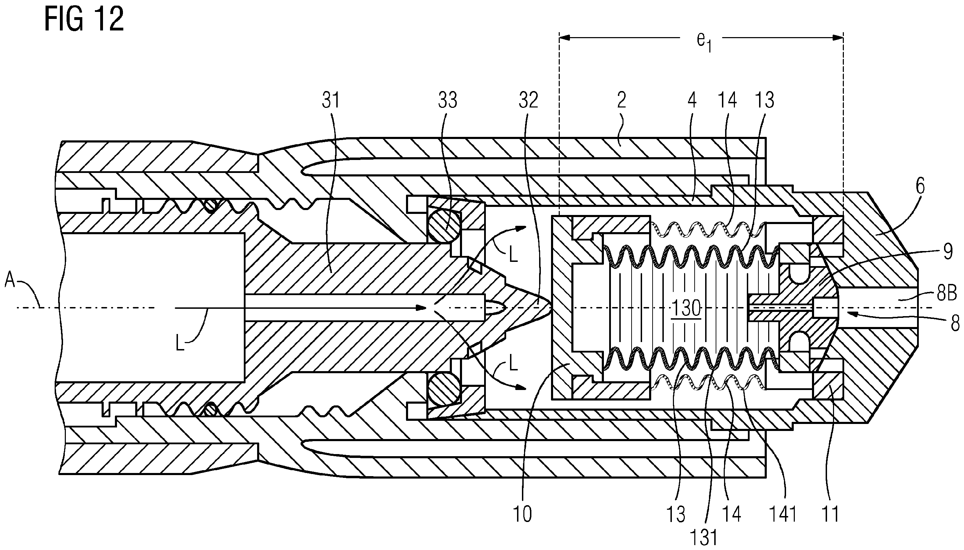

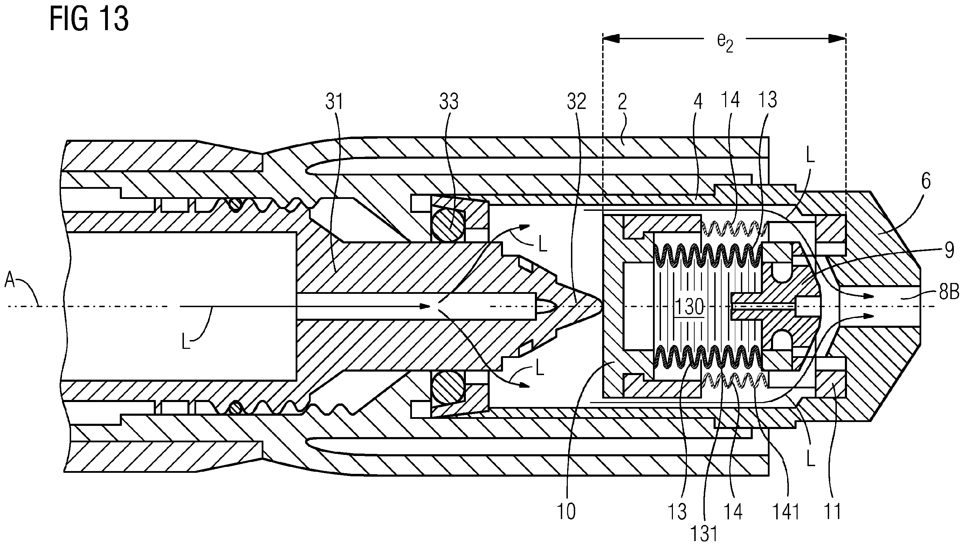

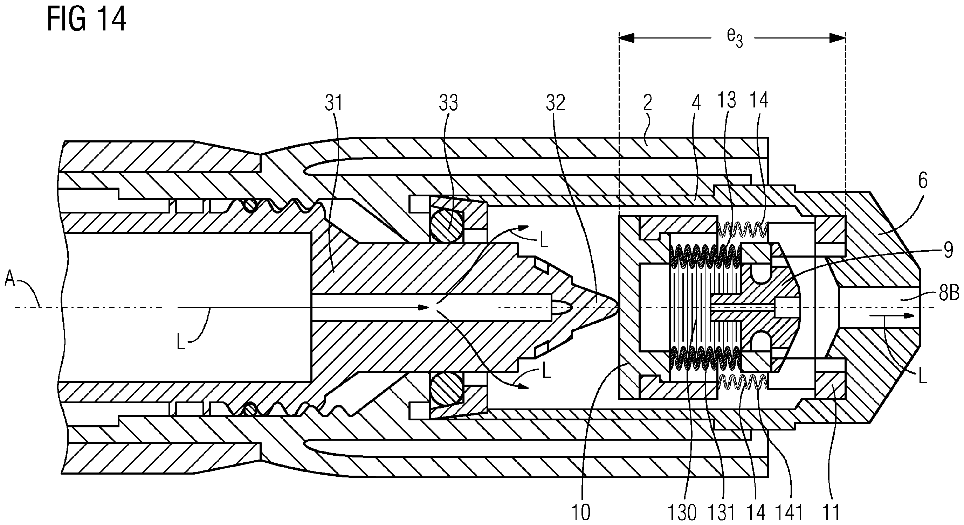

FIG 12 to 14 illustrate a further embodiment of the invention. A pulsator valve device similar or equal to the one illustrated in FIG 1 to 4 is built in the nozzle housing 2 of a garden sprayer. The pulsator valve device is firmly fixed to the end portion of the valve housing 4 which is attached to a seat of the nozzle housing 2. The valve element 9 may shut the outlet 8B completely (FIG 12) or open it more (FIG 14) or less (FIG 13).

The nozzle housing 2 further comprises a positioning element 31 having a positioning pin 32, wherein the positioning pin 32 is positioned adjacent to the actuator element 10 of the pulsator valve device. The positioning element 31 can move along a longitudinal device axis A of the garden sprayer, e.g. an arrangement may be provided for enabling a user to easily adjust the positioning element 31 in defined positions along the device axis A.

Thereby, an opening end position for the actuator element 10 is provided and can be adjusted as a further option for setting the frequency or period of the pulsation or pulsating liquid jet and even allowing for a continuous not pulsating liquid jet (frequency is zero).

Positioning element 31 has a channel or passage which allows the supply of liquid L into the interior space of nozzle housing 2 through the positioning element 31. A sealing element 33 seals the positioning element 31 around its circumference.

The position of the positioning element 31 according to FIG 12 allows the actuator element 10 of the pulsator element to be approximately in a position wherein bellows 13 and 14 are in an equilibrium or most relaxed state and wherein the valve element 9 shuts the outlet 8B. Such a positon of positioning element 31 allows a function of the pulsator element as described for FIG 1 to 4. The maximum allowed longitudinal extension of the pulsator valve device extends over an adjustment length e₁.

In FIG 13, the extension of the pulsator valve device is delimited by the positioning pin 32 which contacts and holds the actuator element 10 in a maximum allowed position, in other words allowing the pulsator valve device a maximum extension over an adjustment length e₂, wherein e₂ < e₁. Thus, bellows 13 and 14 are both partially compressed in an initial or basic position, but bellows 13 and 14 are still able to be further compressed.

In other words, compression and decompression length of the pulsator valve device is reduced. This usually results in a higher frequency or smaller period of the pulsating liquid jet or the opening and closing of the outlet 8B by the valve element 9.

FIG 14 shows the positioning element 31 in a position, where actuator element 10 of the pulsator valve device is placed such that the bellows 14 is fully compressed. in its locked state The bellows 13 is, in this situation, not fully compressed and can be compressed by the liquid pressure pressing the valve element 9. In the case, that the valve element 9 is pressed in an opening position by the liquid pressure, the pulsator valve device is not able to re-shut said outlet 8B, because compression and decompression of the bellows 13 is substantially prevented. Therefore, when the positioning element 31 is arranged in that way, a continuous, i.e. not pulsed, liquid jet is achieved. This behavior can be set by allowing a maximum extension over an adjustment length e₃, as shown in FIG 14, wherein e₃ < e₂.

In all embodiments the valve element 9 may be provided with grooves or indentations to provide for a certain flow of liquid even in the closed state and to prevent pressure peaks.

Furthermore, in all embodiments the valve element 9 can be formed like a check valve or back pressure valve or return valve so that closing intervals and opening intervals can be controlled independently from each other, for instance to control the spraying amount of the liquid over a certain operational time.

### List of reference signs

- 1: spray nozzle
- 2: nozzle housing
- 3: deflector
- 4: valve housing
- 5: deflector holder
- 6: stop portion
- 7: thread connection
- 8: passage
- 8A: inlet
- 8B: outlet
- 9: valve element
- 10: actuator element
- 11: support element
- 12: inner section
- 13: bellows
- 14: bellows
- 16: nozzle element
- 17: support element
- 18: thread connection
- 20: flap valve element
- 22: channel
- 22A: end
- 22B: end
- 24: spring element
- 25: balancing tube
- 26: engagement piece
- 27: catch surface
- 28: guiding passage
- 29: hose
- 30: spring element
- 31: positioning element
- 32: positioning pin
- 33: sealing element
- 37: guiding structure
- 38: pivot joint
- 40: inside surface
- 41: outside surface
- 42, 43: mounting section
- 60: contacting surface
- 83: inner space
- 84: intermediate space
- 90: contacting surface
- 110, 111: openings
- 130: inner space (of bellows 13)
- 131, 141: folds

- A: axis
- A0, A1, A2, A3: surface area
- CD: closing direction
- e₁, e₂, e₃: adjustment length
- L: liquid
- OD: opening direction
- P0, P1, P2, P3: pressure

## Claims

1. Pulsator valve device for generating a pulsed flow of a liquid (L) through an outlet (8B) of a passage (8) for the liquid (L)
the pulsator valve device comprising
a) at least one valve element (9) which is moveable or operated in a repetitive movement or working cycle comprising an opening movement from a closed state for closing the outlet (8B) to at least one opened state for opening the outlet (8B) and a closing movement from an opened state to the closed state,
b) at least one actuator element (10) and
c) at least one resilient first bellows (13) having folds (131) and an inner space (130) being confined in a liquid tight manner, the first bellows (13) being connected with the actuator element (10) and with the valve element (9),
d) wherein the actuator element (10) has at least one hydraulic surface (A2) which can be put under the liquid pressure (P1) of the liquid (L) in the passage (8) on one side and under the internal pressure (P0) prevailing in the inner space (130) of the first bellows (13) on the other side,
e) wherein the first bellows (13) is provided with a liquid exchange channel (22, 25, 14) for its inner space (130) allowing for liquid (L) to flow out of the inner space (130) when the volume of the inner space (130) is reduced during compression of the first bellows (13) and allowing for liquid (L) to flow into the inner space (130) when the volume of the inner space (130) is increased during decompression of the first bellows (13), and
f) wherein the first bellows (13), during at least part of the time when the valve element (9) is in the closed state and/or in at least a part of the opening movement of the valve element (9), is, in particular elastically, compressed by a hydraulic force being generated at the hydraulic surface (A2) of the actuator element (10) due to the pressure difference between the liquid pressure (P1) and the internal pressure (P0) and, in at least a part of the closing movement of the valve element (9), is decompressed by a resilient force in the first bellows (13), when due to a flow of liquid (L) into the inner space (130) through said liquid exchange channel (22) said pressure difference and thus said hydraulic force is reduced or zero.

2. Pulsator valve device according to claim 1, wherein a stop portion (6) is provided enclosing at least a part of the outlet (8B) and having at least one contacting surface (60) which, in the closed state, comes into sealing contact with a corresponding contacting surface (90) of the valve element (9) thereby closing the outlet (8B), wherein, preferably, the contacting surface (90) of the valve element (9) separates a first surface (A1) and a second surface (A0) from each other, wherein the first surface (A1) serves as a hydraulic surface which is put under the liquid pressure (P1) of the liquid (L) in the opened state and in the closed state, and wherein the second surface (A0) faces the outlet (8B) in the closed state and serves as a hydraulic surface which is put under the liquid pressure (P1) of the liquid (L) in the opened state,
wherein, preferably, the first surface (A1) and the second surface (A0) and the contacting surface (90) form a dome or mushroom shaped or conical outside surface (41) of the valve element (9).

3. Pulsator valve device according to claim 1 or claim 2, wherein the liquid exchange channel (22) is formed at least partially within the valve element (9), wherein preferably a first end (22A) of the liquid exchange channel (22) exits into the inner space (130) of the first bellows (13) directly or indirectly by means of an intermediate hose (29) and wherein a second end (22B) of the liquid exchange channel (22) exits into the liquid (L) or the passage (8) for the liquid in the opened state and exits into the outlet (8B) in the closed state,
wherein in particular, in case of a hose (29), the cross-section of the hose (29) is compressed more under a higher liquid pressure (P1), preferably thus self-regulating the flow rate through the hose (29) when the liquid pressure is higher and/or wherein, in particular, the hose (29) is attached to the valve element (9) by a pivot joint (38), in particular wherein the valve element (9) is guided at least in an axial direction by a guiding structure (37).

4. Pulsator valve device according to any of the preceding claims, wherein the first bellows (13) is arranged in between and may be compressed and decompressed between the valve element (9) and the actuator element (10), wherein preferably the first bellows (13) exerts a resilient force in the closing direction (CD) onto the valve element (9) in the closed state, and/or wherein the hydraulic surface (A2) of the actuator element (10) is directed in the opening direction (OD) and/or the hydraulic force generated at the hydraulic surface (A2) of the actuator element (10) is directed in the closing direction (CD).

5. Pulsator valve device according to claim 4, wherein a further resilient element (14) is arranged in between the actuator element (10) and a support element (11) and elastically deformed between the actuator element (10) and the support element (11) and by such deformation generates a resilient force between the actuator element (10) and the support element (11), wherein in particular the further resilient element is a second bellows (14), wherein preferably the second bellows (14) encloses the first bellows (13) and/or has a larger diameter than the first bellows (13),
wherein, preferably, at the beginning of a repetitive movement the actuator element (10) under the influence of the hydraulic force compresses the first bellows (13) and the second bellows (14) in the closed state of the valve element (9) and in an initial opening movement.

6. Pulsator valve device according to any of claims 1 to 3, wherein the first bellows (13) is arranged in between and may be compressed and decompressed between the actuator element (10) and a support element (17), which the first bellows (13) is connected with and which is arranged at a fixed position, preferably at a side opposite to the side of the valve element (9), and/or wherein the hydraulic surface (A2) of the actuator element (10) is directed in the closing direction (CD) and/or the hydraulic force generated at the hydraulic surface (A2) of the actuator element (10) is directed in the opening direction (OD).

7. Pulsator valve device according to claim 6, wherein a further resilient element (24, 30, 14), in particular a spring element (24, 30), preferably tension spring element, or a second bellows (14), is arranged in between and deformed between the valve element (9) and the actuator element (10) and by such deformation, in particular elongation, generates a resilient force, in particular pulling force, between the valve element (9) and the actuator element (10).

8. Pulsator valve device according to any of the preceding claims, wherein a closing end position of the actuator element (10) in the closing direction (CD) is provided either by stopping means, in particular formed by the second bellows (14) when its folds (141) are in a locking state, or by a position where the forces on the actuator element (10) in the opening direction (OD) exceed the forces in the closing direction (CD),
wherein in this closing end position preferably the hydraulic force in the closing direction (CD) at the hydraulic surface (A2) of the actuator element (10) passes through a support structure or element (11) and/or bypasses the valve element (9) and, further preferably, the hydraulic force at the hydraulic surface, in particular first surface (A1), of the valve element (9) moves the valve element (9) in the opening direction (OD) against the smaller resilient force of the first bellows (13) in an initial opening movement, wherein, preferably, after this initial opening movement the second surface (A0) of the valve element (9) also serves as a hydraulic surface increasing the hydraulic force in the opening direction (OD) and thereby compressing the first bellows (13) further and moving the actuator element (10) in the opening direction (OD).

9. Pulsator valve device according to any of the preceding claims, wherein the liquid exchange channel (22) is at least partially formed by a balancing tube (25), connected with the first bellows (13) and/or with the actuator element (10) and preferably moveable within a passage (28) in the valve element (9), wherein the balancing tube (25), preferably, comprises an engagement piece (26) for engaging with a catch surface (27) at the valve element (9) and pulling the valve element (9) away from its closed state or the outlet (8B) or the stop portion (6) thus opening the outlet (8B), wherein, preferably, the balancing tube (25), being moved by the compression movement of the first bellows (13) due to the hydraulic force on the hydraulic surface (A2) of the actuator element (10), engages with its engagement piece (26) with the catch surface (27) and moves the valve element (9) in the opening direction (OD) against the smaller resilient force of the first bellows (13) in an initial opening movement, wherein after this initial opening movement the second surface (A0) of the valve element (9) also serves as a hydraulic surface increasing the hydraulic force in the opening direction (OD).

10. Pulsator valve device according to any of the preceding claims, wherein an opening end position of the actuator element (10) in the closing direction (CD) is provided either by stopping means, in particular formed by the second bellows (14) when its folds (141) are in the most extended state, or by a position where the forces on the actuator element (10) in the closing direction (CD) exceed the forces in the opening direction (OD),
wherein, preferably, in this opening end position the first bellows (13) reaches or has reached its maximum compression and has started or starts to get its inner space (130) gradually refilled with liquid (L) through the liquid exchange channel (22) thereby increasing the internal pressure (P0) in the inner space (130) and reducing the hydraulic force so that the resilient force of the first bellows (13) in the closing direction (CD) moves the valve element (9) back into its closed state.

11. Pulsator valve device according to any of the preceding claims, wherein the inner space (130) of the first bellows (13) is delimited at one side or one end in a liquid-tight manner by the actuator element (10) and is delimited at the other side or other end in a liquid-tight manner by the valve element (10) or by a closed wall
and/or
wherein the actuator element (10) and/or the first bellows (13) and/or the further resilient element, in particular second bellows (14) or spring element (24, 30), is moveably arranged within the passage (8) for the liquid (L), and/or wherein the actuator element (10) and the first bellows (13) and optionally also the valve element (9) and/or the further resilient element (24) and/or the balancing tube (25) together form one pre-manufactured element, in particular made integral with each other as a single piece and/or in one injection molding process and/or in one molding form set, preferably from one or more plastics or polymer materials,
and/or
wherein the actuator element (10) and the second bellows (14) and the support element (11) form one pre-manufactured element, in particular made integral with each other as a single piece and/or in one injection molding process and/or in one molding form set, preferably from one or more plastics or polymer materials.

12. Pulsator valve device according to any of the preceding claims, wherein by at least one or any combination of the following parameters the duration of the opened state and of the closed state and/or the period or frequency of the pulsating flow of liquid (L) is set or determined:
a) the volume of the inner space (130) of the first bellows (13), wherein usually a larger volume will decrease the frequency;
b) the cross-section of the liquid exchange channel (22), wherein usually a larger cross-section will increase the frequency;
c) resilience (resilient or spring hardness) of the first bellows (13) and, if provided, the further resilient element, in particular second bellows (14), wherein usually a higher will shorten the opened state;
d) shapes and ratios of the hydraulic surface areas;
e) distance or amplitude between the closing end position, in particular the locked state of the second bellows (14), and the opposite opening end position, in particular the most elongated state of the second bellows (14), wherein usually a larger distance will increase the frequency;
f) length of the balancing tube (25).

13. Pulsator valve device according to any of the preceding claims, wherein the liquid exchange channel (22) is at least partially formed within a second bellows (14) and/or wherein a flap valve element (20) or a check valve element is provided between the liquid exchange channel (22) and the inner space (130) of the first bellows (13), which at least partially impedes the flow of air and/or liquid (L) from the channel (22) into the inner space (130) and which allows the flow of air and/or liquid (L) from the inner space (130) into the channel (22) and/or wherein grooves are arranged in the valve element allowing for a minimum amount of liquid to flow through even in the closed state.

14. Pulsator valve device according to any of the preceding claims, further comprising at least one positioning element (31), in particular adjustable by a user, which is able to delimit or which delimits the axial movement or defines the opening end position of the actuator element (10) by changing the adjustment length, in particular in such way, that the positioning element (31) can be continuously adjusted to delimit the position of the actuator element (10) in order to fully or partially impede the decompression of the first bellows (13) and thus varying the frequency or in particular allowing a continuous flow of liquid through the outlet (8B).

15. Irrigation device, in particular garden sprayer or garden nozzle, oscillating sprinkler, wide range sprinkler, circular sprinkler or irrigation supply line, comprising a pulsator valve device according to any of the claims 1 to 14.

## Patentansprüche

1. Pulsatorventilvorrichtung zur Erzeugung eines gepulsten Flusses einer Flüssigkeit (L) durch einen Auslass (8B) eines Durchgangs (8) für die Flüssigkeit (L) die Pulsatorventilvorrichtung umfasst
a) mindestens ein Ventilelement (9), das in einer sich wiederholenden Bewegung oder einem Arbeitszyklus beweglich ist oder betätigt wird, der eine Öffnungsbewegung von einem geschlossenen Zustand zum Schließen des Auslasses (8B) in mindestens einen geöffneten Zustand zum Öffnen des Auslasses (8B) und eine Schließbewegung von einem geöffneten Zustand in den geschlossenen Zustand umfasst,
b) mindestens ein Betätigungselement (10) und
c) mindestens einen elastischen ersten Balg (13) mit Falten (131) und einem flüssigkeitsdicht umschlossenen Innenraum (130), wobei der erste Faltenbalg (13) mit dem Betätigungselement (10) und mit dem Ventilelement (9) verbunden ist,
d) wobei das Betätigungselement (10) mindestens eine hydraulische Oberfläche (A2) aufweist, die auf der einen Seite unter den Flüssigkeitsdruck (P1) der Flüssigkeit (L) im Durchgang (8) und auf der anderen Seite unter den Innendruck (P0), der im Innenraum (130) des ersten Balgs (13) herrscht, gesetzt werden kann,
e) wobei der erste Balg (13) mit einem Flüssigkeitsaustauschkanal (22, 25, 14) für seinen Innenraum (130) versehen ist, der es ermöglicht, dass Flüssigkeit (L) aus dem Innenraum (130) herausfließt, wenn das Volumen des Innenraums (130) während der Kompression des ersten Balgs (13) verringert wird, und der es ermöglicht, dass Flüssigkeit (L) in den Innenraum (130) fließt, wenn das Volumen des Innenraums (130) während der Dekompression des ersten Balgs (13) vergrößert wird, und
f) wobei der erste Balg (13) zumindest während eines Teils der Zeit, wenn sich das Ventilelement (9) im geschlossenen Zustand und/oder zumindest in einem Teil der Öffnungsbewegung des Ventilelements (9) befindet, insbesondere elastisch durch eine hydraulische Kraft komprimiert wird, die an der hydraulischen Oberfläche (A2) des Betätigungselements (10) aufgrund der Druckdifferenz zwischen dem Flüssigkeitsdruck (P1) und dem Innendruck (P0) erzeugt wird, und, in zumindestens einem Teil der Schließbewegung des Ventilelements (9) durch eine elastische Kraft im ersten Balg (13) dekomprimiert wird, wenn aufgrund eines Flüssigkeitsstroms (L) in den Innenraum (130) durch den Flüssigkeitsaustauschkanal (22) die Druckdifferenz und damit die hydraulische Kraft reduziert wird oder Null ist.

2. Pulsatorventilvorrichtung nach Anspruch 1, wobei ein Anschlagabschnitt (6) vorgesehen ist, der mindestens einen Teil des Auslasses (8B) umschließt und mindestens eine Kontaktfläche (60) aufweist, die im geschlossenen Zustand in dichtenden Kontakt mit einer entsprechenden Kontaktfläche (90) des Ventilelements (9) kommt und dadurch den Auslass (8B) verschließt, wobei vorzugsweise die Kontaktfläche (90) des Ventilelements (9) eine erste Fläche (A1) und eine zweite Fläche (A0) voneinander trennt, wobei die erste Oberfläche (A1) als hydraulische Oberfläche dient, die im geöffneten und im geschlossenen Zustand unter den Flüssigkeitsdruck (P1) der Flüssigkeit (L) gesetzt wird, und wobei die zweite Oberfläche (A0) im geschlossenen Zustand dem Auslass (8B) zugewandt ist und als hydraulische Oberfläche dient, die im geöffneten Zustand unter den Flüssigkeitsdruck (P1) der Flüssigkeit (L) gesetzt ist, wobei vorzugsweise die erste Oberfläche (A1) und die zweite Oberfläche (A0) und die Kontaktfläche (90) eine kuppelförmige oder pilzförmige oder konische Außenfläche (41) des Ventilelements (9) bilden.

3. Pulsatorventilvorrichtung nach Anspruch 1 oder Anspruch 2, wobei der Flüssigkeitsaustauschkanal (22) zumindest teilweise innerhalb des Ventilelements (9) ausgebildet ist, wobei vorzugsweise ein erstes Ende (22A) des Flüssigkeitsaustauschkanals (22) direkt oder indirekt mittels eines Zwischenschlauchs (29) in den Innenraum (130) des ersten Balgs (13) mündet und wobei ein zweites Ende (22B) des Flüssigkeitsaustauschkanals (22) im geöffneten Zustand in die Flüssigkeit (L) oder den Durchgang (8) für die Flüssigkeit und im geschlossenen Zustand in den Auslass (8B) mündet, wobei insbesondere bei einem Schlauch (29) der Querschnitt des Schlauches (29) unter einem höheren Flüssigkeitsdruck (P1) stärker komprimiert wird, wodurch vorzugsweise die Durchflussmenge durch den Schlauch (29) selbstregulierend ist, wenn der Flüssigkeitsdruck höher ist und/oder wobei insbesondere der Schlauch (29) über ein Drehgelenk (38) an dem Ventilelement (9) befestigt ist, wobei insbesondere das Ventilelement (9) zumindest in axialer Richtung durch eine Führungsstruktur (37) geführt ist.

4. Pulsatorventilvorrichtung nach einem der vorhergehenden Ansprüche, wobei der erste Balg (13) zwischen dem Ventilelement (9) und dem Betätigungselement (10) angeordnet ist und zwischen diesen komprimierbar und dekomprimierbar ist, wobei vorzugsweise der erste Balg (13) im geschlossenen Zustand eine elastische Kraft in Schließrichtung (CD) auf das Ventilelement (9) ausübt, und/oder wobei die hydraulische Oberfläche (A2) des Betätigungselements (10) in Öffnungsrichtung (OD) gerichtet ist und/oder die an der hydraulischen Oberfläche (A2) des Betätigungselements (10) erzeugte hydraulische Kraft in Schließrichtung (CD) gerichtet ist.

5. Pulsatorventileinrichtung nach Anspruch 4, wobei ein weiteres elastisches Element (14) zwischen dem Betätigungselement (10) und einem Stützelement (11) angeordnet und zwischen dem Betätigungselement (10) und dem Stützelement (11) elastisch verformt ist und durch diese Verformung eine elastische Kraft zwischen dem Betätigungselement (10) und dem Stützelement (11) erzeugt, wobei insbesondere das weitere elastische Element ein zweiter Balg (14) ist, wobei vorzugsweise der zweite Balg (14) den ersten Balg (13) umschließt und/oder einen größeren Durchmesser als der erste Balg (13) aufweist, wobei vorzugsweise zu Beginn einer sich wiederholenden Bewegung das Betätigungselement (10) unter dem Einfluss der hydraulischen Kraft den ersten Balg (13) und den zweiten Balg (14) im geschlossenen Zustand des Ventilelements (9) und in einer anfänglichen Öffnungsbewegung zusammendrückt.

6. Pulsatorventilvorrichtung nach einem der Ansprüche 1 bis 3, wobei der erste Balg (13) zwischen dem Betätigungselement (10) und einem Stützelement (17), mit dem der erste Balg (13) verbunden ist und das an einer festen Position angeordnet ist, angeordnet ist und zwischen diesen komprimiert und dekomprimiert werden kann, vorzugsweise an einer der Seite des Ventilelements (9) gegenüberliegenden Seite, und/oder wobei die hydraulische Oberfläche (A2) des Betätigungselements (10) in Schließrichtung (CD) gerichtet ist und/oder die an der hydraulischen Oberfläche (A2) des Betätigungselements (10) erzeugte hydraulische Kraft in Öffnungsrichtung (OD) gerichtet ist.

7. Pulsatorventilvorrichtung nach Anspruch 6, wobei ein weiteres elastisches Element (24, 30, 14), insbesondere ein Federelement (24, 30), vorzugsweise Zugfederelement, oder ein zweiter Balg (14), zwischen dem Ventilelement (9) und dem Betätigungselement (10) angeordnet und zwischen diesen verformt ist und durch diese Verformung, insbesondere Dehnung, eine elastische Kraft, insbesondere Zugkraft, zwischen dem Ventilelement (9) und dem Betätigungselement (10) erzeugt.

8. Pulsatorventilvorrichtung nach einem der vorhergehenden Ansprüche, wobei eine schließende Endstellung des Betätigungselements (10) in Schließrichtung (CD) entweder durch Anschlagmittel, die insbesondere durch den zweiten Balg (14) gebildet werden, wenn seine Falten (141) in einem Verriegelungszustand sind, oder durch eine Stellung, in der die Kräfte auf das Betätigungselement (10) in Öffnungsrichtung (OD) die Kräfte in Schließrichtung (CD) übersteigen, vorgesehen ist, wobei in dieser schließenden Endstellung vorzugsweise die hydraulische Kraft in Schließrichtung (CD) an der hydraulischen Oberfläche (A2) des Betätigungselements (10) durch eine Stützstruktur oder ein Element (11) verläuft und/oder das Ventilelement (9) umgeht und ferner vorzugsweise die hydraulische Kraft an der hydraulischen Oberfläche, insbesondere der ersten Oberfläche (A1), des Ventilelements (9) das Ventilelement (9) in einer anfänglichen Öffnungsbewegung gegen die kleinere elastische Kraft des ersten Balgs (13) in die Öffnungsrichtung (OD) bewegt, wobei vorzugsweise nach dieser anfänglichen Öffnungsbewegung die zweite Fläche (A0) des Ventilelements (9) auch als hydraulische Fläche dient, die die hydraulische Kraft in der Öffnungsrichtung (OD) erhöht und dadurch den ersten Balg (13) weiter komprimiert und das Betätigungselement (10) in die Öffnungsrichtung (OD) bewegt.

9. Pulsatorventilvorrichtung nach einem der vorhergehenden Ansprüche, wobei der Flüssigkeitsaustauschkanal (22) zumindest teilweise durch ein Ausgleichsrohr (25) gebildet wird, das mit dem ersten Balg (13) und/oder mit dem Betätigungselement (10) verbunden und vorzugsweise innerhalb eines Durchgangs (28) im Ventilelement (9) beweglich ist, wobei das Ausgleichsrohr (25) vorzugsweise ein Eingriffsstück (26) aufweist, das mit einer Fangfläche (27) am Ventilelement (9) in Eingriff kommt und das Ventilelement (9) aus seinem geschlossenen Zustand oder dem Auslass (8B) oder dem Anschlagteil (6) wegzieht und so den Auslass (8B) öffnet, wobei vorzugsweise das Ausgleichsrohr (25) durch die Kompressionsbewegung des ersten Balgs (13) aufgrund der hydraulischen Kraft auf die hydraulische Oberfläche (A2) des Betätigungselements (10) bewegt wird, mit seinem Eingriffsstück (26) in die Rastfläche (27) eingreift und das Ventilelement (9) in einer ersten Öffnungsbewegung gegen die geringere elastische Kraft des ersten Balges (13) in Öffnungsrichtung (OD) bewegt, wobei nach dieser ersten Öffnungsbewegung die zweite Fläche (A0) des Ventilelementes (9) auch als hydraulische Fläche dient, die die hydraulische Kraft in Öffnungsrichtung (OD) erhöht.

10. Pulsatorventilvorrichtung nach einem der vorhergehenden Ansprüche, wobei eine geöffnete Endstellung des Betätigungselements (10) in Schließrichtung (CD) entweder durch Anschlagmittel, insbesondere durch den zweiten Balg (14) gebildet ist, wenn sich seine Falten (141) in dem am weitesten ausgestreckten Zustand befinden, oder durch eine Stellung, in der die Kräfte auf das Betätigungselement (10) in Schließrichtung (CD) die Kräfte in Öffnungsrichtung (OD) übersteigen, vorgesehen ist, wobei vorzugsweise der erste Balg (13) in dieser geöffneten Endstellung seine maximale Kompression erreicht oder erreicht hat und damit begonnen hat oder beginnt, seinen Innenraum (130) allmählich durch den Flüssigkeitsaustauschkanal (22) mit Flüssigkeit (L) zu füllen, wodurch der Innendruck (P0) im Innenraum (130) erhöht und die hydraulische Kraft verringert wird, so dass die elastische Kraft des ersten Balgs (13) in Schließrichtung (CD) das Ventilelement (9) zurück in seinen geschlossenen Zustand bewegt.

11. Pulsatorventilvorrichtung nach einem der vorhergehenden Ansprüche, wobei der Innenraum (130) des ersten Balges (13) an einer Seite oder einem Ende flüssigkeitsdicht durch das Betätigungselement (10) und an der anderen Seite oder dem anderen Ende flüssigkeitsdicht durch das Ventilelement (10) oder durch eine geschlossene Wand begrenzt ist
und/oder
wobei das Betätigungselement (10) und/oder der erste Balg (13) und/oder das weitere elastische Element, insbesondere der zweite Balg (14) oder
das Federelement (24, 30), innerhalb des Durchgangs (8) für die Flüssigkeit (L) beweglich angeordnet ist,
und/oder wobei das Betätigungselement (10) und der erste Balg (13) und optional auch das Ventilelement (9) und/oder das weitere elastische Element (24) und/oder das Ausgleichsrohr (25) zusammen ein vorgefertigtes Element bilden, insbesondere einstückig zueinander und/oder in einem Spritzgussverfahren und/oder in einem Spritzgussformsatz, vorzugsweise aus einem oder mehreren Kunststoffen oder Polymerwerkstoffen, angefertigt sind,
und/oder
wobei das Betätigungselement (10) und der zweite Balg (14) und das Stützelement (11) ein vorgefertigtes Element bilden, das insbesondere einstückig zueinander und/oder in einem Spritzgussverfahren und/oder in einem Spritzgussformsatz, vorzugsweise aus einem oder mehreren Kunststoffen oder Polymerwerkstoffen, einstückig miteinander hergestellt ist.

12. Pulsatorventilvorrichtung nach einem der vorhergehenden Ansprüche, wobei durch mindestens einen oder eine Kombination der folgenden Parameter die Dauer des geöffneten und des geschlossenen Zustandes und/oder die Phase oder Frequenz des pulsierenden Flüssigkeitsstromes (L) eingestellt oder bestimmt wird:
a) das Volumen des Innenraums (130) des ersten Balgs (13), wobei normalerweise ein größeres Volumen die Frequenz verringert;
b) der Querschnitt des Flüssigkeitsaustauschkanals (22), wobei normalerweise ein größerer Querschnitt die Frequenz erhöht;
c) die Elastizität (Elastizität oder Federhärte) des ersten Balgs (13) und, falls vorgesehen, des weiteren elastischen Elements, insbesondere des zweiten Balgs (14), wobei normalerweise ein größerer Querschnitt den geöffneten Zustand verkürzt;
d) Formen und Verhältnisse der hydraulischen Oberflächenbereiche;
e) Abstand oder Amplitude zwischen der schließenden Endstellung, insbesondere dem verriegelten Zustand des zweiten Balgs (14), und der gegenüberliegenden geöffneten Endstellung, insbesondere dem am stärksten gedehnten Zustand des zweiten Balgs (14), wobei normalerweise ein größerer Abstand die Frequenz erhöht;
f) Länge des Ausgleichsrohrs (25).

13. Pulsatorventilvorrichtung nach einem der vorhergehenden Ansprüche, wobei der Flüssigkeitsaustauschkanal (22) zumindest teilweise innerhalb eines zweiten Balges (14) ausgebildet ist und/oder wobei ein Klappenventilelement (20) oder ein Rückschlagventilelement zwischen dem Flüssigkeitsaustauschkanal (22) und dem Innenraum (130) des ersten Balges (13) vorgesehen ist, die den Strom von Luft und/oder Flüssigkeit (L) aus dem Kanal (22) in den Innenraum (130) zumindest teilweise behindert und den Strom von Luft und/oder Flüssigkeit (L) aus dem Innenraum (130) in den Kanal (22) zulässt und/oder wobei in dem Ventilelement Rillen angeordnet sind, die auch im geschlossenen Zustand eine minimale Flüssigkeitsmenge durchströmen lassen.

14. Pulsatorventilvorrichtung nach einem der vorhergehenden Ansprüche, ferner mit mindestens einem Positionierelement (31), das insbesondere durch einen Benutzer einstellbar ist, das die axiale Bewegung begrenzen kann oder das die axiale Bewegung begrenzt oder die geöffnete Endstellung des Betätigungselements (10) durch Änderung der Einstelllänge definiert, insbesondere derart, dass das Positionierelement (31) stufenlos verstellbar ist, um die Position des Betätigungselements (10) zu begrenzen, um die Dekompression des ersten Balgs (13) ganz oder teilweise zu behindern und damit die Frequenz zu variieren oder insbesondere einen kontinuierlichen Flüssigkeitsstrom durch den Auslass (8B) zu ermöglichen.

15. Bewässerungsvorrichtung, insbesondere Gartenspritze oder Gartendüse, oszillierender Sprinkler, Weitbereichssprinkler, Kreissprinkler oder Bewässerungszuleitung, umfassend eine Pulsatorventilvorrichtung nach einem der Ansprüche 1 bis 14.

## Revendications

1. Dispositif à clapet de pulsation pour générer un écoulement pulsé d'un liquide (L) à travers une sortie (8B) d'un passage (8) pour le liquide (L) le dispositif à clapet de pulsation comprenant
a) au moins un élément de clapet (9) qui est mobile ou actionné selon un mouvement répétitif ou un cycle de travail comprenant un mouvement d'ouverture, d'un état fermé pour fermer la sortie (8B) à au moins un état ouvert pour ouvrir la sortie (8B), et un mouvement de fermeture, d'un état ouvert à l'état fermé,
b) au moins un élément actionneur (10) et
c) au moins un premier soufflet (13) élastique ayant des plis (131) et un espace interne (130) étant confiné d'une manière étanche aux liquides, le premier soufflet (13) étant relié à l'élément actionneur (10) et à l'élément de clapet (9),
d) dans lequel l'élément actionneur (10) possède au moins une surface hydraulique (A2) qui peut être mise sous la pression de liquide (P1) du liquide (L) dans le passage (8) sur un côté et sous la pression interne (P0) régnant dans l'espace interne (130) du premier soufflet (13) sur l'autre côté,
e) dans lequel le premier soufflet (13) est muni d'un canal d'échange de liquide (22, 25, 14) pour son espace interne (130) permettant au liquide (L) de s'écouler hors de l'espace interne (130) lorsque le volume de l'espace interne (130) est réduit au cours de la compression du premier soufflet (13) et permettant au liquide (L) de s'écouler dans l'espace interne (130) lorsque le volume de l'espace interne (130) est augmenté au cours de la décompression du premier soufflet (13), et
f) dans lequel le premier soufflet (13), au cours d'au moins une partie du temps pendant lequel l'élément de clapet (9) est dans l'état fermé et/ou dans au moins une partie du mouvement d'ouverture de l'élément de clapet (9), est, en particulier de manière élastique, compressé par une force hydraulique qui est générée au niveau de la surface hydraulique (A2) de l'élément actionneur (10) en raison de la différence de pression entre la pression de liquide (P1) et la pression interne (P0) et, dans au moins une partie du mouvement de fermeture de l'élément de clapet (9), est décompressé par une force élastique dans le premier soufflet (13), lorsqu'en raison d'un écoulement de liquide (L) dans l'espace interne (130) à travers ledit canal d'échange de liquide (22), ladite différence de pression et donc ladite force hydraulique est réduite ou nulle.

2. Dispositif à clapet de pulsation selon la revendication 1, dans lequel une partie d'arrêt (6) est fournie en enfermant au moins une partie de la sortie (8B) et ayant au moins une surface de contact (60) qui, dans l'état fermé, vient en contact d'étanchéité avec une surface de contact correspondante (90) de l'élément de clapet (9) ce qui ferme la sortie (8B), dans lequel, de préférence, la surface de contact (90) de l'élément de clapet (9) sépare une première surface (A1) et une seconde surface (A0) l'une de l'autre, dans lequel la première surface (A1) sert de surface hydraulique qui est mise sous la pression de liquide (P1) du liquide (L) dans l'état ouvert et dans l'état fermé, et dans lequel la seconde surface (A0) fait face à la sortie (8B) dans l'état fermé et sert de surface hydraulique qui est mise sous la pression de liquide (P1) du liquide (L) dans l'état ouvert, dans lequel, de préférence, la première surface (A1) et la seconde surface (A0) et la surface de contact (90) forment une surface extérieure (41) conique ou en forme de dôme ou de champignon de l'élément de clapet (9).

3. Dispositif à clapet de pulsation selon la revendication 1 ou la revendication 2, dans lequel le canal d'échange de liquide (22) est formé au moins partiellement à l'intérieur de l'élément de clapet (9), dans lequel de préférence une première extrémité (22A) du canal d'échange de liquide (22) débouche dans l'espace interne (130) du premier soufflet (13) directement ou indirectement au moyen d'un tuyau intermédiaire (29) et dans lequel une seconde extrémité (22B) du canal d'échange de liquide (22) débouche dans le liquide (L) ou le passage (8) pour le liquide dans l'état ouvert et débouche dans la sortie (8B) dans l'état fermé, dans lequel en particulier, dans le cas d'un tuyau (29), la section transversale du tuyau (29) est davantage compressée sous une pression de liquide plus élevée (P1), de préférence régulant ainsi automatiquement le débit à travers le tuyau (29) lorsque la pression de liquide est plus élevée et/ou dans lequel, en particulier, le tuyau (29) est fixé à l'élément de clapet (9) par une articulation à pivot (38), en particulier dans lequel l'élément de clapet (9) est guidé au moins dans une direction axiale par une structure de guidage (37).

4. Dispositif à clapet de pulsation selon l'une quelconque des revendications précédentes, dans lequel le premier soufflet (13) est agencé entre, et peut être compressé et décompressé entre, l'élément de clapet (9) et l'élément actionneur (10), dans lequel de préférence le premier soufflet (13) exerce une force élastique dans la direction de fermeture (CD) sur l'élément de clapet (9) dans l'état fermé, et/ou dans lequel la surface hydraulique (A2) de l'élément actionneur (10) est dirigée dans la direction d'ouverture (OD) et/ou la force hydraulique générée au niveau de la surface hydraulique (A2) de l'élément actionneur (10) est dirigée dans la direction de fermeture (CD).

5. Dispositif à clapet de pulsation selon la revendication 4, dans lequel un élément élastique (14) supplémentaire est agencé entre l'élément actionneur (10) et un élément de support (11) et déformé de manière élastique entre l'élément actionneur (10) et l'élément de support (11) et par cette déformation génère une force élastique entre l'élément actionneur (10) et l'élément de support (11), dans lequel en particulier l'élément élastique supplémentaire est un second soufflet (14), dans lequel de préférence le second soufflet (14) enferme le premier soufflet (13) et/ou possède un plus grand diamètre que le premier soufflet (13), dans lequel, de préférence, au début d'un mouvement répétitif, l'élément actionneur (10) sous l'influence de la force hydraulique compresse le premier soufflet (13) et le second soufflet (14) dans l'état fermé de l'élément de clapet (9) et dans un mouvement d'ouverture initial.

6. Dispositif à clapet de pulsation selon l'une quelconque des revendications 1 à 3, dans lequel le premier soufflet (13) est agencé entre, et peut être compressé et décompressé entre, l'élément actionneur (10) et un élément de support (17), avec lequel le premier soufflet (13) est relié et qui est agencé à une position fixe, de préférence sur un côté opposé au côté de l'élément de clapet (9), et/ou dans lequel la surface hydraulique (A2) de l'élément actionneur (10) est dirigée dans la direction de fermeture (CD) et/ou la force hydraulique générée au niveau de la surface hydraulique (A2) de l'élément actionneur (10) est dirigée dans la direction d'ouverture (OD).

7. Dispositif à clapet de pulsation selon la revendication 6, dans lequel un élément élastique (24, 30, 14) supplémentaire, en particulier un élément ressort (24, 30), de préférence un élément ressort de tension, ou un second soufflet (14), est agencé entre, et déformé entre, l'élément de clapet (9) et l'élément actionneur (10) et par cette déformation, en particulier un allongement, génère une force élastique, en particulier une force de traction, entre l'élément de clapet (9) et l'élément actionneur (10).

8. Dispositif à clapet de pulsation selon l'une quelconque des revendications précédentes, dans lequel une position d'extrémité de fermeture de l'élément actionneur (10) dans la direction de fermeture (CD) est fournie soit par des moyens d'arrêt, en particulier formés par le second soufflet (14) lorsque ses plis (141) sont dans un état de verrouillage, ou par une position où les forces sur l'élément actionneur (10) dans la direction d'ouverture (OD) dépassent les forces dans la direction de fermeture (CD),
dans lequel, dans cette position d'extrémité de fermeture, de préférence la force hydraulique dans la direction de fermeture (CD) au niveau de la surface hydraulique (A2) de l'élément actionneur (10) traverse une structure ou un élément de support (11) et/ou contourne l'élément de clapet (9) et, de préférence en outre, la force hydraulique au niveau de la surface hydraulique, en particulier de la première surface (A1), de l'élément de clapet (9) déplace l'élément de clapet (9) dans la direction d'ouverture (OD) à l'encontre de la force élastique plus faible du premier soufflet (13) dans un mouvement d'ouverture initial, dans lequel, de préférence, après ce mouvement d'ouverture initial, la seconde surface (A0) de l'élément de clapet (9) sert également de surface hydraulique augmentant la force hydraulique dans la direction d'ouverture (OD) et ce qui compresse davantage le premier soufflet (13) et déplace l'élément actionneur (10) dans la direction d'ouverture (OD).

9. Dispositif à clapet de pulsation selon l'une quelconque des revendications précédentes, dans lequel le canal d'échange de liquide (22) est au moins partiellement formé par un tube d'équilibrage (25), relié au premier soufflet (13) et/ou à l'élément actionneur (10) et de préférence mobile à l'intérieur d'un passage (28) dans l'élément de clapet (9), dans lequel le tube d'équilibrage (25), de préférence, comprend une pièce de mise en prise (26) pour venir en prise avec une surface d'accrochage (27) au niveau de l'élément de clapet (9) et tirer l'élément de clapet (9) en l'éloignant de son état fermé ou de la sortie (8B) ou de la partie d'arrêt (6) en ouvrant ainsi la sortie (8B), dans lequel, de préférence, le tube d'équilibrage (25), qui est déplacé par le mouvement de compression du premier soufflet (13) en raison de la force hydraulique sur la surface hydraulique (A2) de l'élément actionneur (10), vient en prise avec sa pièce de mise en prise (26) avec la surface d'accrochage (27) et déplace l'élément de clapet (9) dans la direction d'ouverture (OD) à l'encontre de la force élastique plus faible du premier soufflet (13) dans un mouvement d'ouverture initial, dans lequel après ce mouvement d'ouverture initial la seconde surface (A0) de l'élément de clapet (9) sert également de surface hydraulique augmentant la force hydraulique dans la direction d'ouverture (OD).

10. Dispositif à clapet de pulsation selon l'une quelconque des revendications précédentes, dans lequel une position d'extrémité d'ouverture de l'élément actionneur (10) dans la direction de fermeture (CD) est fournie soit par des moyens d'arrêt, en particulier formés par le second soufflet (14) lorsque ses plis (141) sont dans l'état le plus étendu, soit par une position où les forces sur l'élément actionneur (10) dans la direction de fermeture (CD) dépassent les forces dans la direction d'ouverture (OD), dans lequel, de préférence, dans cette position extrémité d'ouverture, le premier soufflet (13) atteint ou a atteint sa compression maximale et a commencé ou commence à avoir son espace interne (130) progressivement rempli avec le liquide (L) à travers le canal d'échange de liquide (22) ce qui augmente la pression interne (P0) dans l'espace interne (130) et réduit la force hydraulique de sorte que la force élastique du premier soufflet (13) dans la direction de fermeture (CD) ramène l'élément de clapet (9) dans son état fermé.

11. Dispositif à clapet de pulsation selon l'une quelconque des revendications précédentes, dans lequel l'espace interne (130) du premier soufflet (13) est délimité sur un côté ou une extrémité d'une manière étanche aux liquides par l'élément actionneur (10) et est délimité sur l'autre côté ou l'autre extrémité d'une manière étanche aux liquides par l'élément de clapet (10) ou par une paroi fermée et/ou dans lequel l'élément actionneur (10) et/ou le premier soufflet (13) et/ou l'élément élastique supplémentaire, en particulier le second soufflet (14) ou l'élément ressort (24, 30), est agencé de manière mobile à l'intérieur du passage (8) pour le liquide (L), et/ou dans lequel l'élément actionneur (10) et le premier soufflet (13) et facultativement également l'élément de clapet (9) et/ou l'élément élastique (24) supplémentaire et/ou le tube d'équilibrage (25) forment ensemble un élément préfabriqué, en particulier rendus solidaires les uns des autres en une seule pièce et/ou dans un processus de moulage par injection et/ou dans un jeu de formes de moulage, de préférence à partir d'un ou de plusieurs plastiques ou matériaux polymères, et/ou dans lequel l'élément actionneur (10) et le second soufflet (14) et l'élément de support (11) forment un élément préfabriqué, en particulier rendus solidaires les uns des autres en une seule pièce et/ou dans un processus de moulage par injection et/ou dans un jeu de formes de moulage, de préférence à partir d'un ou de plusieurs plastiques ou matériaux polymères.

12. Dispositif à clapet de pulsation selon l'une quelconque des revendications précédentes, dans lequel, par au moins l'un ou une quelconque combinaison des paramètres suivants, la durée de l'état ouvert et de l'état fermé et/ou la période ou la fréquence du débit de liquide (L) à pulsation est définie ou déterminée :
a) le volume de l'espace interne (130) du premier soufflet (13), dans lequel généralement un plus grand volume diminuera la fréquence ;
b) la section transversale du canal d'échange de liquide (22), dans lequel généralement une plus grande section transversale augmentera la fréquence ;
c) l'élasticité (dureté élastique ou de ressort) du premier soufflet (13) et, le cas échéant, de l'élément élastique supplémentaire, en particulier du second soufflet (14), dans lequel généralement une élasticité plus élevée raccourcira l'état ouvert ;
d) les formes et les proportions des surfaces hydrauliques ;
e) la distance ou l'amplitude entre la position d'extrémité de fermeture, en particulier l'état verrouillé du second soufflet (14), et la position d'extrémité d'ouverture opposée, en particulier l'état le plus allongé du second soufflet (14), dans lequel généralement une plus grande distance augmentera la fréquence ;
f) la longueur du tube d'équilibrage (25).

13. Dispositif à clapet de pulsation selon l'une quelconque des revendications précédentes, dans lequel le canal d'échange de liquide (22) est au moins partiellement formé à l'intérieur d'un second soufflet (14) et/ou dans lequel un élément de clapet à volet (20) ou un élément de clapet anti-retour est fourni entre le canal d'échange de liquide (22) et l'espace interne (130) du premier soufflet (13), qui entrave au moins partiellement l'écoulement d'air et/ou de liquide (L) à partir du canal (22) dans l'espace interne (130) et qui autorise l'écoulement d'air et/ou de liquide (L) à partir de l'espace interne (130) dans le canal (22) et/ou dans lequel des rainures sont agencées dans l'élément de clapet permettant à une quantité minimale de liquide de s'écouler à travers même dans l'état fermé.

14. Dispositif à clapet de pulsation selon l'une quelconque des revendications précédentes, comprenant en outre au moins un élément de positionnement (31), en particulier ajustable par un utilisateur, qui est apte à délimiter ou qui délimite le mouvement axial ou définit la position d'extrémité d'ouverture de l'élément actionneur (10) en modifiant la longueur d'ajustement, en particulier d'une manière telle que l'élément de positionnement (31) peut être ajusté en continu pour délimiter la position de l'élément actionneur (10) afin d'entraver totalement ou partiellement la décompression du premier soufflet (13) et ainsi faire varier la fréquence ou en particulier permettre un écoulement continu de liquide à travers la sortie (8B).

15. Dispositif d'irrigation, en particulier pulvérisateur de jardin ou buse de jardin, arroseur oscillant, arroseur à large portée, arroseur circulaire ou conduite d'alimentation d'irrigation, comprenant un dispositif à clapet de pulsation selon l'une quelconque des revendications 1 à 14.
